# EUROPÄISCHE PATENTSCHRIFT

(11) **EP 3 776 843 B1**
(45) Veröffentlichungstag und Bekanntmachung des Hinweises auf die Patenterteilung: **30.04.2025**
(21) Anmeldenummer: 19722501.4
(22) Anmeldetag: 27.03.2019
(51) Int. Cl.: H02S 20/25

(54) **DACHEINDECKUNGSELEMENT, SOLAR-DACHEINDECKUNGSELEMENT, ANORDNUNG VON SOLAR-DACHEINDECKUNGSELEMENTEN UND HERSTELLUNGSVERFAHREN FÜR EIN SOLAR-DACHEINDECKUNGSELEMENT**
ROOF COVERING ELEMENT, SOLAR ROOF COVERING ELEMENT, ASSEMBLY OF SOLAR ROOF COVERING ELEMENTS, AND METHOD FOR PRODUCING A SOLAR ROOF COVERING ELEMENT
ÉLÉMENT DE COUVERTURE DE TOIT, ÉLÉMENT DE COUVERTURE DE TOIT SOLAIRE, ASSEMBLAGE D'ÉLÉMENTS DE COUVERTURE DE TOIT SOLAIRES ET PROCÉDÉ DE FABRICATION POUR UN ÉLÉMENT DE COUVERTURE DE TOIT SOLAIRE

(30) Priorität: 27.03.2018 DE 102018002476
(43) Veröffentlichungstag der Anmeldung: 17.02.2021
(73) Patentinhaber: Autarq GmbH, 17291 Prenzlau (DE)
(72) Erfinder: PAUL, Cornelius, 22769 Hamburg (DE); NEBERG, Dieter, 12353 Berlin (DE); MACK, Martin, 17291 Prenzlau (DE)
(74) Vertreter: Spahn, Tobias
(86) Internationale Anmeldenummer: PCT/DE2019/000084
(87) Internationale Veröffentlichungsnummer: WO 2019/185076

(56) Entgegenhaltungen:
- WO-A1-2016/139256
- FR-A1- 2 947 099
- US-A1- 2014 041 715

## Beschreibung

### Technisches Gebiet

Die Erfindung betrifft ein Dacheindeckungselement, ein Solar-Dacheindeckungselement, eine Anordnung von Solar-Dacheindeckungselementen und ein Herstellungsverfahren für ein Solar-Dacheindeckungselement

### Stand der Technik

Im Stand der Technik sind Solar-Dacheindeckungselemente bekannt, welche aus einem beispielsweise durch einen Dachziegel oder einen Dachstein gebildeten flächigen Grundkörper, einem aus siliziumbasierten Solarzellen gebildeten Solarmodul und einer die witterungsbeständige Dachhaut bildenden Glasscheibe oder einer Kunststoffschicht bestehen. Der Vorteil der Verwendung solcher, unmittelbar die Dachhaut bildenden Solar-Dacheindeckungselemente zur Herstellung einer Solar-Dachanlage besteht in der konstruktiv einfachen und ästhetisch ansprechenden Integration in die bestehende Dachkonstruktion ohne gesonderte Trägersysteme oder -elemente.

Praktische Schwierigkeiten bestehen in Hinblick auf die Gewährleistung einer hinreichend funktionssicheren und normgerechten Kontaktierung und Verschaltung der elektrischen Komponenten bei der Realisierung eines kostengünstigen großserientauglichen Fertigungsverfahrens sowie der Ermöglichung einer einfachen und kostengünstigen Dachmontage.

Die DE 10 2012 008 852 A1 und die deren Priorität beanspruchende WO 2013/167110 A1 offenbaren einen Dachstein mit einem plattenförmigen Grundkörper aus Gussmaterial und einem darauf angeordneten Solarmodul wobei der Grundkörper mindestens zwei Löcher aufweist, in denen Leitungen geführt sind. Durch die Löcher des Grundkörpers sind elektrische Kabel geführt, die vorzugsweise bereits vor der Durchführung mit Kontakten versehen sind und die mit der Solarmatrix des Solarmoduls verbunden sind. Eine bestimmte Ausgestaltung oder Herstellung dieser Verbindung werden von der DE 10 2012 008 852 A1 oder der WO 2013/167110 A1 nicht vorgeschlagen. Zur Herstellung einer Anordnung aus mehreren Dachsteinen wird vorgeschlagen, dass diese über eine Parallelschaltung miteinander verbunden sind, wobei einfache Steckkontakte Verwendung finden können.

DE 197 04 255 A1 offenbart einen Solar-Dachziegel, bestehend aus einem Dachziegel und vertieft im Dachziegel positionierten, verschalteten Solarzellen mit Anschlusskontakten, deren wasserdampfdiffusionsdichte Kontaktierung auf der Rückseite des Dachziegels erfolgt. Hierzu ragen zwei von den Solarzellen ausgehende Kontaktierungsdrähte in einer durchgehenden Bohrung in den Dachziegel hinein. Von der Rückseite des Dachziegels ist durch einen Stecker- oder Kontaktblock eine dauerhafte Kontaktierung mit den Drähten ermöglicht. In Bezug auf die Realisierung eines kostengünstigen, großserientauglichen Fertigungsverfahrens ist die von der DE 197 04 255 A1 offenbarte Kontaktierung insoweit nachteilhaft, als innerhalb der durchgehenden Bohrung eine Einführung relativ dünner, forminstabiler Kontaktdrähte in entsprechende Aufnahmen von der Rückseite des Dachziegels angesetzten oder teilweise in die Bohrung eingeführten Stecker- oder Kontaktblocks gewährleistet sein muss. Die Herstellung einer solchen Steckverbindung erfordert eine hohe fertigungstechnische Präzision zur Sicherstellung einer sichereren Verbindung mit dem Stecker- oder Kontaktblock, ohne dass die Kontaktdrähte hierbei verbogen werden. Dies erfordert bei einer automatisierten Fertigung eine hohe Positionierungspräzision in den Anfahrwegen und begrenzt gleichzeitig die mögliche Fertigungsgeschwindigkeit. Zudem besitzt die Ausführung als reine körperliche Steckverbindung den Nachteil, dass bereits geringe Fertigungstoleranzen zu Fehlern der Steckverbindung oder deren Belastbarkeit und Haltbarkeit führen. Insbesondere hohe Temperaturen im Sommer aufgrund starker Sonneneinstrahlung und hoher Last können zu einer starken Materialalterung und hierdurch bedingten Fehlern der Steckverbindung führen. Hierbei können hohe Übergangswiderstände in den Steckverbindungen entstehen, was zu Kabel oder Schwelbränden führen kann.

Die WO 2013/046195 A1 oder das Dokument US 2014/041715 A1 offenbart eine Verbunddämmplatte mit einem auf einer Oberseite der Verbunddämmplatte angeordneten Photovoltaikmodul mit einem flächigen Grundkörper und einer senkrecht zu seiner Grundfläche verlaufenden Öffnung, bei der zwei elektrische Leitungen in einem gemeinsamen Einstecksockel von der Unterseite durch die Öffnung geführt sind, wobei der Einstecksockel an der Unterseite des Grundkörpers durch Verschrauben oder Verkleben befestigt wird. Auf der der Oberseite des Grundkörpers wird ein separater Anschlusssockel mit Kontaktmitteln in die Öffnung eingepresst und die Kontaktmittel des Anschlusssockels jeweils durch Steckverbindungen mit den Leitungen des Einstecksockels verbunden. Die Konstruktion umfasst verhältnismäßig viele gesonderte Einzelteile und erfordert die Herstellung einer Leitungsverbindung innerhalb der Öffnung im Rahmen des Herstellungsprozesses, was eine entsprechend hohe Fertigungspräzision der Einzelteile und des Herstellungsprozesses notwendig macht. Die Befestigung der separaten Einzelkomponenten und die hiervon gesonderte Herstellung der elektrischen Verbindung erfordern ein verhältnismäßig aufwendiges und teures Fertigungsverfahren.

### Offenbarung der Erfindung

Der Erfindung liegt die Aufgabe zu Grunde, die dargestellten Nachteile zu vermeiden. Insbesondere sollen ein Dacheindeckungselement und ein Solar-Dacheindeckungselement für eine Solar-Dachanlage bereitgestellt werden, die mittels eines kostengünstigen großserientauglichen Fertigungsverfahrens herstellbar sind und die eine einfache und kostengünstige Dachmontage ermöglichen.

Den Kern der Erfindung bildet ein Dacheindeckungselement mit einem flächigen Grundkörper, dessen Oberseite eine Aufnahmefläche für ein Solarmodul aufweist und der eine senkrecht zu seiner Grundfläche verlaufende Öffnung oder Bohrung aufweist, durch die mindestens zwei elektrische Leitungen gemeinsam geführt sind und bei welchem die Leitungen auf der Oberseite des Grundkörpers im Bereich der Aufnahmefläche als Kontaktmittel enden, die in einem gemeinsamen flachen Anschlusssockel gehalten oder axialbeweglich geführt sind, wobei die elektrischen Leitungen in einem gemeinsamen Einstecksockel von der Unterseite durch die Öffnung oder Bohrung geführt sind und der Einstecksockel auf der Unterseite des Grundkörpers in axialer Einsteckrichtung formschlüssig durch einen Einsteckflansch und auf der Oberseite des Grundkörpers gegen seine axiale Einsteckrichtung form- und/oder kraftschlüssig durch ein Arretierungsmittel gehalten ist und auf der Oberseite des Grundkörpers den Anschlusssockel bildet. Als Grundkörper sind im Sinne der Erfindung jegliche flächigen Bauelemente zu verstehen, mit denen sich eine hinreichend stabile Dacheindeckung herstellen lässt und die mit einer Aufnahmefläche für ein Solarmodul ausbildbar sind, also beispielsweise Dachziegel, Dachsteine oder Dachschindeln aus Ton, Stein, Beton, Zement, Metall, Glas, Bitumen, Kunststoff, Holz oder einem organischen oder anorganischen Faser-Verbundstoff. Flächig bedeutet im Sinne der Erfindung, dass der Grundkörper in der Fläche eine größere Ausdehnung besitzt, als in der Höhe. Als Auflagefläche ist im Sinne der Erfindung ein in seiner Längen- und Breitenausdehnung definierbarer Bereich auf der Oberseite des Grundkörpers zu verstehen, auf dem ein Solarmodul anordenbar und montierbar ist. Die Oberfläche des Grundkörpers kann im Bereich der Auflagefläche eben, aber auch gekrümmt ausgeführt sein, beispielsweise bei einem ziegelförmigen Grundkörper mit einem Wellenprofil. Als Solarmodul sind im Sinne der Erfindung sämtlichen elektrischen Bauelemente zu verstehen, mit welchen Sonnenlicht direkt in elektrische Energie umwandelbar ist, insbesondere Photovoltaikmodule aus einer oder mehreren Silizium- oder Dünnschicht-Solarzelle oder -Solarzellen. Das Solarmodul kann hierbei als Bauelement mit einem ebenflächigen Körper, beispielsweise als plattenförmiger Quader, aber auch als Körper mit gekrümmten Flächen, bspw. einem Wellenprofil ausgeführt sein. Die elektrischen Leitungen dienen dem Transport elektrischer Energie sowie gegebenenfalls zusätzlich der Signalübertragung. Sie können entweder als ein gemeinsames mehradriges Kabel oder als Bündel mehrerer einadriger Kabel ausgeführt sein. Die Leitungen bilden im Anschlusssockel mindestens zwei Kontaktmittel, welche die beiden zur Herstellung eines Stromflusses erforderlichen elektrischen Pole abbilden. Der Grundkörper ist mit einer einzigen senkrecht zu seiner Grundfläche verlaufenden Öffnung oder Bohrung einfach herstellbar. Da sämtliche elektrischen Anschlüsse auf der Oberseite des Grundkörpers in einem gemeinsamen flachen Anschlusssockel als Kontaktmittel angeordnet sind, ist eine einfache elektrische Verbindbarkeit mit einem auf der Auflagefläche positionierten Solarmodul im Wege eines kostengünstigen großserientauglichen Fertigungsverfahrens ermöglicht. Die elektrischen Leitungen sind erfindungsgemäß in einem gemeinsamen Einstecksockel von der Unterseite durch die Öffnung oder Bohrung geführt, wobei der Einstecksockel auf der Unterseite des Grundkörpers in axialer Einsteckrichtung formschlüssig durch einen Einsteckflansch und auf der Oberseite des Grundkörpers gegen seine axiale Einsteckrichtung form- und/oder kraftschlüssig durch ein Arretierungsmittel gehalten ist und auf der Oberseite des Grundkörpers den Anschlusssockel bildet. Der Einstecksockel ist zusammen mit dem Anschlusssockel als einteiliges Bauteil oder als ein vorgefertigter Bauteilverbund ausgeführt. Dies ermöglicht eine im Rahmen des Fertigungsverfahrens einfach herzustellende und stabile Durchführung der elektrischen Leitungen durch den Grundkörper. Ferner ermöglicht dies die Herstellung des Dacheindeckungselements mit verhältnismäßig große Fertigungstoleranzen, beispielsweise bei der Dimensionierung der Öffnung oder Bohrung, da der Einstecksockel und der Anschlusssockel durch den an der Unterseite des Grundkörpers angeordneten Einsteckflansch und das an der Oberseite des Grundkörpers angeordnete Arretierungsmittel im Grundkörper stabil gehalten ist.

Zur Abdichtung der elektrischen Verbindung gegen eindringende Feuchtigkeit von der Unterseite des Grundkörpers ist zwischen dem Einsteckflansch und der Unterseite des Grundkörpers ein Dichtungselement angeordnet. Das Dichtungselement kann ein aushärtendes oder dauerelastisches Material, wie beispielsweise Gummi, Silikon oder ein Elastomer sein.

In einer einfachen Ausführungsvariante ist der Einsteckflansch auf der Oberseite des Grundkörpers durch eine Klammer oder einen Sprengring als Arretierungsmittel gehalten.

In einer stabilen Ausführungsvariante ist das Arretierungsmittel ein Hohlelement, das mit einem auf der Oberseite des Grundkörpers gegen die axiale Einsteckrichtung des Einstecksockels wirkenden Halteflansch ausgebildet ist und das mit einer Innenkulisse formschlüssig oder form- und kraftschlüssig an eine korrespondierende Außenkulisse des Einstecksockels angreift. Dies ermöglicht die Arretierung des Einstecksockels durch das Aufsetzen des Hohlelements gegen die axiale Einsteckrichtung des Einstecksockels.

Zur konstruktiv einfach herstellbaren formschlüssigen Verbindung ist das Hohlelement eine Außenhülse, die mit einer Schraubverbindung oder einer Steck-Drehverbindung (Bajonett-Verschluss) an einen korrespondierenden Einsteckabschnitt des Einstecksockels angreift. Die Arretierung des Einstecksockels erfolgt durch das Aufsetzen des Hohlelements gegen die axiale Einsteckrichtung des Einstecksockels in einer Schraubbewegung oder einer Steck-Drehbewegung.

Zur konstruktiv einfach herstellbaren form- und kraftschlüssigen Verbindung ist das Hohlelement eine in axialer Einsteckrichtung geschlitzte Außenhülse, die rastend an einen korrespondierenden Einsteckabschnitt des Einstecksockels angreift. Die Arretierung des Einstecksockels erfolgt durch das Aufsetzen des Hohlelements gegen die axiale Einsteckrichtung des Einstecksockels in einer Steckbewegung, wobei die Außenhülse auf dem Einsteckabschnitt einrastet.

Zur Abdichtung der elektrischen Verbindung gegen Feuchtigkeit, die zwischen der Oberseite des Grundkörpers und der Unterseite eines auf diesem anordenbaren Solarmoduls eindringen kann, ist auf der Oberseite des Halteflanschs ein Dichtungselement angeordnet.

Eine einfache mechanische Herstellung der elektrischen Verbindung mit einem auf der Auflagefläche positionierten Solarmodul im Wege eines kostengünstigen großserientauglichen Fertigungsverfahrens wird ermöglicht, indem die Kontaktmittel aus dem Anschlusssockel herausragen und in diesem gegen die Einsteckrichtung federbelastet geführt sind. Eine stabile elektrische Verbindung ist hierdurch einfach durch die Herstellung einer kombinierten form- und kraftschlüssigen Verbindung von korrespondierenden Kontakten gegen die Federbelastung möglich.

Die Herstellung einer festen elektrischen Verbindung mit einem auf der Auflagefläche positionierten Solarmodul im Wege eines kostengünstigen großserientauglichen Fertigungsverfahrens wird einfach ermöglicht, indem die Kontaktmittel im Anschlusssockel fest oder mit einem axialen Verformungsspiel gehalten sind. Dies gewährleistet beispielsweise die einfache Herstellung einer Lötverbindung auf der Oberseite des Grundkörpers. Zur Erleichterung einer solchen Lötverbindung im Wege eines kostengünstigen großserientauglichen Fertigungsverfahrens sind die Kontaktmittel aus einem Lotmaterial gebildet oder mit einer Lotbeschichtung ausgebildet.

Alternativ wird die Herstellung einer festen elektrischen Verbindung mit einem auf der Auflagefläche positionierten Solarmodul im Wege eines kostengünstigen großserientauglichen Fertigungsverfahrens einfach ermöglicht, indem der Einstecksockel mit einem Einführkanal oder zwei Einführkanälen für ein Lötwerkzeug ausgebildet ist, welcher oder welche über eine Zugangsöffnung auf der Unterseite des Einstecksockels zugänglich ist oder sind und über welchen oder welche ein Kontakt zu den Kontaktmitteln herstellbar ist. In dieser Ausgestaltung ist die Verlötung des Dacheindeckungselements von der Unterseite des Grundkörpers und des Einstecksockels aus ermöglicht. Das Lötwerkzeug ist hierbei in einen unmittelbaren physischen Kontakt mit den Kontaktmitteln bringbar. Nach dem Verlöten wird der Einführkanal oder werden die die Einführkanäle mit einem Dichtstoff verschlossen, um die elektrische Isolierung der Kontaktmittel zu gewährleisten und diese vor äußeren Witterungseinflüssen zu schützen. Bei einer weiteren Verbesserung dieser Ausführung ist der Einführkanal oder sind die Einführkanäle am oberen Ende nicht offen ausgestaltet, sondern endet oder enden an seinem oder ihrem oberen Ende in einem Wirkabstand zu den Kontaktmitteln. In dieser Ausgestaltungsvariante ist die Verlötung des Dacheindeckungselements von der Unterseite des Grundkörpers und des Einstecksockels aus durch ein Induktionslötwerkzeug ermöglicht. Der Wirkabstand des oberen Endes des Einführkanals oder der Einführkanäle wird hierbei derart gewählt, dass jeweils ein ausreichender Energieeintrag durch ein den Einführkanal eingeführtes Induktionslötwerkzeug auf die Kontaktmittel gewährleistet ist. Da der Einführkanal oder die Einführkanäle am oberen Ende nicht offen ausgestaltet ist oder sind, ist die elektrische Isolierung und der Witterungsschutz der Kontaktmittel gewährleistet.

Zur Erleichterung der Dachmontage des Dacheindeckungselements enden die Leitungen auf der Unterseite des Grundkörpers oder unterhalb der Unterseite in einem Abstand zu dieser als Kontakte in einem mehrpoligen Steckverbinder. Die Leitungen bilden im Steckverbinder mindestens zwei Kontakte, welche die beiden zur Herstellung eines Stromflusses erforderlichen elektrischen Pole abbilden. Die Leitungen sind über den Steckverbinder einfach und flexibel mit weiteren Komponenten einer Solar-Dachanlage verbindbar. Um hierbei ohne Zwischenschaltung eines Verlängerungskabels erforderlichenfalls eine Anschlussstrecke überwinden zu können, enden die Leitungen erst in einem Abstand zur Unterseite als Kontakte in dem Steckverbinder. Hierzu sind die Leitungen beispielsweise zunächst als gemeinsames Kabel aus der Öffnung oder Bohrung oder, wenn ein solcher vorgesehen ist, aus dem Einstecksockel herausgeführt, wobei das Kabel an seinem Ende mit dem mehrpoligen Steckverbinder ausgebildet ist.

Eine einfache elektrische Anschlussprüfung wird für das Dacheindeckungselement ermöglicht, indem ein Kondensator vorgesehen ist, der zwischen den die beiden elektrischen Pole bildenden Leitungen, Kontakten oder Kontaktmitteln angeschlossen ist. Beim Anschluss des Dacheindeckungselements an eine Schaltung kann das Vorhandensein des Kondensators über eine Messung mit einem Wechselspannungssignal einfach elektrisch ermittelt werden. Solarmodule arbeiten ausschließlich mit Gleichspannung, für die der Kondensator im Betrieb "unsichtbar" ist, sich also nicht störend oder hindernd auswirkt. Auf diese Weise wird die gewünschte Funktion (Erzeugung elektrischer Energie auf Basis von Gleichspannung) nicht von der Messfunktion beeinträchtigt, die über ein Wechselstromsignal ausgeübt wird. Bei der Verschaltung einer Vielzahl von Dacheindeckungselementen kann auf diese Weise die Anzahl der erfolgreich angeschlossenen Kondensatoren und somit die Anzahl der erfolgreich angeschlossenen Dacheindeckungselemente einfach gezählt, bzw. detektiert werden.

Zur Bereitstellung einer Rückstromsperre ist in der oder den wenigstens einen elektrischen Pol abbildenden Leitung eine Rückstromdiode angeordnet. Bei der Verschaltung einer Vielzahl von Dacheindeckungselementen mit Solarmodulen in einer Parallelschaltung kann ein elektrischer Fehler in einem der angeschlossenen Solarmodule dazu führen, dass die übrigen Solarmodule den von ihnen abgegebenen Strom in das defekte Solarmodul einspeisen, was zu einer Überhitzung führen und einen Brand auslösen kann. Um dies zu verhindern, ist in der oder den wenigstens einen elektrischen Pol abbildenden Leitungen des Dacheindeckungselements in geeigneter Richtung eine Diode angeordnet, so dass sie den Stromfluss (Energieabgabe) aus dem Solarmodul heraus ermöglicht, den Stromfluss in das Solarmodul (Energieaufnahme) jedoch verhindert, d.h. als Rückstromsperre dient.

In einer besonders kompakten Ausführungsvariante, bei der die Leitungen unterhalb der Unterseite des Grundkörpers als Kontakte in einem gemeinsamen Steckverbinder enden, ist oder sind der Kondensator und/oder die Rückstromdiode innerhalb des Steckverbinders angeordnet.

Zur Verwendung als Solar-Dacheindeckungselement ist auf der Oberseite des Grundkörpers ein Solarmodul angeordnet, welches auf seiner der Oberseite des Grundkörpers zugewandten Seite Rückkontaktmittel, beispielsweise in Form von Metallplättchen, aufweist, die korrespondierend zu den Kontaktmitteln angeordnet sind.

Sind gleichzeitig die Kontaktmittel aus dem Anschlusssockel herausragend und in diesem gegen die Einsteckrichtung federbelastet ausgeführt, erfolgt eine stabile elektrische Verbindung mit dem Solarmodul, indem dieses mit den Rückkontaktmitteln auf die Kontaktmittel gegen deren Federbelastung aufgelegt wird und die Komponenten miteinander verbunden werden.

Sind die Kontaktmittel im Anschlusssockel hingegen fest oder mit einem axialen Verformungsspiel gehalten, erfolgt eine stabile elektrische Verbindung mit dem Solarmodul, indem dieses mit den Rückkontaktmitteln auf die Kontaktmittel aufgelegt und eine Lötverbindung hergestellt wird. Zur Erleichterung einer solchen Lötverbindung im Wege eines kostengünstigen großserientauglichen Fertigungsverfahrens sind entweder die Kontaktmittel, oder die Rückkontaktmittel oder sowohl die Kontaktmittel als auch die Rückkontaktmittel aus einem Lotmaterial gebildet oder mit einer Lotbeschichtung ausgebildet.

Für den Verwendungszweck als Solar-Dacheindeckungselement ist es besonders vorteilhaft, wenn das Solarmodul eine Zellmatrix aus mehreren in Reihe geschalteten Solarzellen aufweist. Einzelzellen sind am Markt üblicherweise mit einer Abmessung von etwa 15 cm x 15 cm erhältlich und besitzen unter Belastung üblicherweise eine Leistungsabgabe mit hohen Strömen von etwa 8 A bei einer niedrigen Spannung von etwa 0,5 V. Durch die Verwendung einer Zellmatrix mit einer Mehrzahl kleinerer Zellen, die in Reihe geschaltet sind, wird stattdessen eine vergleichbare Leistungsabgabe mit im Verhältnis niedrigeren Strömen bei einer relativ höheren Spannung erreicht. Durch die Verwendung einer Zellmatrix aus zum Beispiel 50 bis 100 kleinerer Zellen, die in Reihe geschaltet sind, ist gegenüber herkömmlichen am Markt verfügbaren Einzelzellen beispielsweise eine vergleichbare Leistungsabgabe mit verhältnismäßigen niedrigen Strömen von etwa 0,2 A bei einer höheren Spannung von etwa 50 V bis 60 V erreichbar. Mit kleinen Zellen ist gleichzeitig auch eine wesentlich bessere Flächenabdeckung des jeweils verwendeten Grundkörpers erreichbar, indem das Format, die Anzahl und die Anordnung der kleinen Zellen so gewählt werden, dass die verfügbare Aufnahmefläche des Grundkörpers unter gleichzeitiger Berücksichtigung der jeweils gewünschten Gesamtspannung möglichst weit abgedeckt ist. Am Markt erhältliche Einzelzellen in üblichen Formaten können hierzu in kleinere Zellen mit den gewünschten Maßen - z.B. mit einem Laser - zerschnitten und als Zellmatrix neu angeordnet und konfektioniert werden.

Zum Schutz der elektrischen Komponenten vor Feuchtigkeit und zur Gewährleistung einer hinreichenden Witterungsbeständigkeit ist die die Dachhaut bildende Oberseite des Solar-Dacheindeckungselements durch eine Glasscheibe oder eine Kunststoffscheibe oder -folie gebildet. Diese kann zugleich die Oberseite des Solarmoduls sein.

Zur Herstellung einer Solar-Anlage sind die Solar-Dacheindeckungselemente vorzugsweise in einer Parallelschaltung miteinander verbunden. Dies bietet zum einen den Vorteil, dass eine Verschattung eines oder mehrerer Solarmodule - zum Beispiel durch Laub oder Schmutz - stets nur zu einer Verringerung der Systemleistung um die Leistung des oder der betroffenen Solarmoduls oder Solarmodule führt. Zum anderen wird die Spannung des Gesamtsystems unabhängig von der Anzahl der miteinander verbundenen Solar-Dacheindeckungselemente konstant gehalten. Mit der Anzahl der verbundenen Solarmodule ändern sich lediglich die Leistung und der Strom der Gesamtanlage. Hierdurch ist gewährleistet, dass die Spannung der Solar-Anlage unabhängig von der Gesamtanzahl der verbundenen Solarmodule stets innerhalb der Grenzwerte der Kleinspannung (Spannungsbereich I nach IEC 60449) gehalten werden kann. Die Kombination aus Parallelschaltung und Kleinspannungsbetrieb verringert die Kosten und Komplexität der Planung und Gestaltung der Gesamtanlage, weil dies mit verringerten Anforderungen an die elektrische Leitungsführung sowie an die Auslegung der elektrischen Leitungen, Anschlüsse und Isolation verbunden ist. Schließlich ist dies auch mit erheblich geringeren Risiken für das ausführende Personal bei der Montage und dem Anschluss der Anlage verbunden. Die Montage der Solar-Dacheindeckungselemente auf dem Dach kann daher ohne besondere elektrotechnisch ausgebildete oder geschulte Fachkräfte, beispielsweise auch durch Dachdecker erfolgen.

Praktische Erfahrungen haben gezeigt, dass auch die mit der Verwendung einer Zellmatrix aus einer Vielzahl von miteinander in Reihe geschalteten kleineren Solarzellen erzielbare Gesamtspannung noch zu niedrig ausgelegt sein kann. Die verfügbare Aufnahmefläche ist beispielsweise auch bei marktgängigen Großformaten von Dachziegeln oder Dachsteinen unter praktischen Fertigungsgesichtspunkten lediglich mit einer Zellmatrix von 50 bis maximal 100 miteinander in Reihe geschalteten Solarzellen nutzbar. Hiermit ist in der Praxis unter Belastung typischerweise eine Gesamtspannung von maximal etwa 50 V bis 60 V pro Solarmodul erzielbar, die bei effektiver Auslegung einer Solar-Dachanlage noch immer zu niedrig ausgelegt sein kann. Bei Dacheindeckungselementen mit einer kleineren als Aufnahmefläche nutzbaren Grundfläche, wie zum Beispiel Biberschwänzen, ist entsprechend lediglich eine mit einer Zellmatrix von maximal 18 oder 20 miteinander in Reihe geschalteten Solarzellen und damit einer entsprechenden niedrigeren Gesamtspannung pro Solarmodul verfügbare Aufnahmefläche nutzbar. In diesen Fällen lässt sich eine günstigere höhere, jedoch noch innerhalb der Grenzwerte der Kleinspannung liegende Gesamtspannung erreichen, indem jeweils mindestens zwei Solar-Dacheindeckungselemente gruppenweise miteinander in einer Reihenschaltung miteinander verbunden sind und die in Reihe geschalteten Solar-Dacheindeckungselement-Gruppen wiederum in einer Parallelschaltung miteinander verbunden sind.

Praktische Erfahrungen haben gezeigt, dass für die effektive Auslegung einer Solar-Dachanlage mit Solar-Dacheindeckungselementen eine Gesamtspannung von maximal 80 bis 120 V unter Belastung wünschenswert ist, womit die Grenzwerte der Kleinspannung noch eingehalten, aber auch vollständig oder nahezu ausgeschöpft werden. Um dies zu gewährleisten, ist die Anzahl der gruppenweise in einer Reihenschaltung miteinander verbunden Solar-Dacheindeckungselemente entsprechend auf eine Gesamtspannung von maximal 80 V bis 120 V ausgelegt.

In der vorstehenden Ausführungsvariante ist eine konstruktiv einfache und effektive Dachmontage gewährleistet, indem die Leitungen der Solar-Dacheindeckungselemente jeweils unterhalb der Unterseite des Grundkörpers in einem mehrpoligen Steckverbindungsmittel enden und die Solar-Dacheindeckungselemente jeweils gruppenweise über ein gemeinsames Mehrfach-Steckverbindungsmittel miteinander verbindbar und in Reihe schaltbar sind, wobei die Reihenschaltung durch eine geeignete Leitungsführung im inneren des Mehrfachsteckverbindungsmittels hergestellt wird, und die Solar-Dacheindeckungselement-Gruppen über die Mehrfach-Steckverbindungsmittel jeweils mit den Hauptleitungen verbindbar und hierbei miteinander parallel schaltbar sind. Die Reihenschaltung wird dabei über eine geeignete interne Leitungsführung im Mehrfach-Steckverbindungsmittel realisiert.

Eine weitere Vereinfachung besteht ausgehend von der vorstehenden Ausführungsvariante darin, dass die Mehrfach-Steckverbindungsmittel jeweils mit zwei Durchdringungskontakten an je zwei unterschiedliche elektrische Pole der Hauptleitungen angreifen. Unter einem Durchdringungskontakt ist ein Kontaktmittel zu verstehen, mit welchem sich ein dauerhafter Kontakt mit der Leitung eines Kabels herstellen lässt, indem dieses die Isolierungsschicht und einen gegebenenfalls vorhandenen Kabelmantel durchdringt. Dies kann beispielsweise ein Dorn sein, der durch das Kabel geschossen wird. Ferner kann dies ein Schneid-Klemm-Kontakt sein. Die Mehrfach-Steckverbindungsmittel greifen hierbei jeweils mit einem Durchdringungskontakt an einen Pluspol und mit dem anderen Durchdringungskontakt an einen Minuspol der Hauptleitungen an. Der besondere Vorteil dieser Ausführungsvariante besteht darin, dass die Hauptleitungen zusammen als Kabel mit den Mehrfach-Steckverbindungsmitteln vorkonfektioniert und als Rollenware bereitgestellt und bei der Montage der Solardachanlage verarbeitet werden können. Die Montage der Mehrfach-Steckverbindungsmittel kann hierbei einfach mit den Durchdringungskontakten an einem bereits vorkonfektionierten Kabel erfolgen, ohne dass die Isolierung sowie die Kabelummantelung an den Kontaktstellen zuvor gesondert entfernt werden müssen.

Zur einfachen Herstellung eines Solar-Dacheindeckungselements, bei welchem die Kontaktmittel aus dem Anschlusssockel herausragen und in diesem gegen die Einsteckrichtung federbelastet geführt sind, wird das Solarmodul auf der Aufnahmefläche angeordnet, wobei ein Kraftschluss zwischen den Kontaktmitteln und den Rückkontaktmitteln gegen die Federbelastung der Kontaktmittel hergestellt wird.

Zur einfachen Herstellung eines Solar-Dacheindeckungselements, bei welchem die Kontaktmittel im Anschlusssockel fest oder mit einem axialen Verformungsspiel gehalten sind und die Kontaktmittel und/oder die Rückkontaktmittel aus einem Lotmaterial gebildet oder mit einer Lotbeschichtung ausgebildet sind, wird das Solarmodul auf der Aufnahmefläche angeordnet und eine Erhitzung der gemeinsamen Kontaktflächen der Kontaktmittel mit den Rückkontaktmitteln bis zum Schmelzpunkt des Lotmittels eines Energieeintrags durch das Solarmodul hindurch bewirkt. Die Erhitzung kann hierbei in einer konstruktiv einfachen Weise durch Induktionslöten erfolgen.

Zur einfachen Herstellung eines Solar-Dacheindeckungselements, bei welchem die Kontaktmittel im Anschlusssockel fest oder mit einem axialen Verformungsspiel gehalten sind und die Kontaktmittel und/oder die Rückkontaktmittel aus einem Lotmaterial gebildet oder mit einer Lotbeschichtung ausgebildet sind, und wobei der Einstecksockel mit einem Einführkanal oder zwei Einführkanälen für ein Lötwerkzeug ausgebildet ist, welcher oder welche über eine Zugangsöffnung auf der Unterseite des Einstecksockels zugänglich ist oder sind und über welchen oder welche ein Kontakt zu den Kontaktmitteln herstellbar ist, wird das Solarmodul auf der Aufnahmefläche angeordnet und eine Erhitzung der gemeinsamen Kontaktflächen der Kontaktmittel mit den Rückkontaktmitteln bis zum Schmelzpunkt des Lots durch ein in den Einführkanal oder sukzessiv in die Einführkanäle eingeführtes Lötwerkzeug oder zwei gleichzeitig parallel in die Einführkanäle eingeführte Lötwerkzeuge bewirkt. In dieser Ausgestaltung des Verfahrens ist die Verlötung des Solar-Dacheindeckungselements von der Unterseite des Grundkörpers und des Einstecksockels aus ermöglicht. Das Lötwerkzeug ist hierbei in einen unmittelbaren physischen Kontakt mit den Kontaktmitteln bringbar. Der Einfuhrkanal beziehungsweise die Einfuhrkanäle werden nach erfolgter Lötung mit einem Dichtstoff verschlossen, um die elektrische Isolierung der Kontaktmittel zu gewährleisten und diese vor äußeren Witterungseinflüssen zu schützen. In einer weiteren Verbesserung des Herstellungsverfahrens ist der Einführkanal oder sind die Einführkanäle am oberen Ende nicht offen ausgestaltet, sondern endet oder enden an seinem oder ihrem oberen Ende in einem Wirkabstand zu den Kontaktmitteln. In dieser Ausgestaltungsvariante wird der für die Lötung erforderliche Energieeintrag durch ein in den Einführkanal oder sukzessiv in die Einführkanäle eingeführtes Induktionslötwerkzeug oder zwei gleichzeitig parallel in die Einführkanäle eingeführte Induktionslötwerkzeuge gewährleistet. Der Wirkabstand des oberen Endes des Einführkanals oder der Einführkanäle wird hierbei derart gewählt, dass jeweils ein ausreichender Energieeintrag durch ein den Einführkanal eingeführtes Induktionslötwerkzeug auf die Kontaktmittel gewährleistet ist. Da der Einführkanal oder die Einführkanäle am oberen Ende nicht offen ausgestaltet ist oder sind, ist die elektrische Isolierung und der Witterungsschutz der Kontaktmittel gewährleistet.

Weitere Vorteile der Erfindung sind nachstehend gemeinsam mit der Beschreibung eines bevorzugten Ausführungsbeispiels der Erfindung anhand der Figuren 1 bis 15 dargestellt. Es zeigen:
- Fig. 1: eine perspektivische Ansicht eines Einstecksockels,
- Fig. 2: eine perspektivische Darstellung des Verlaufs eines Kabels innerhalb des in Figur 1 gezeigten Einstecksockels,
- Fig. 3: den in Figur 1 gezeigten Einstecksockel mit einer Außenhülse als perspektivische Explosionsdarstellung,
- Fig. 4: ein Solarmodul in einer teiltransparenten, perspektivischen Ansicht,
- Fig. 5: eine perspektivische Explosivdarstellung eines Solar-Dacheindeckungselements,
- Fig. 6: eine weitere perspektivische Explosivdarstellung des Solar-Dacheindeckungselements gemäß Fig. 5,
- Fig. 7: eine weitere perspektivische Explosivdarstellung des Solar-Dacheindeckungselements gemäß der Fig. 5 und Fig. 6,
- Fig. 8: eine perspektivische Darstellung des Solar-Dacheindeckungselements gemäß der Fig. 5 bis 7,
- Fig. 9: eine perspektivische Darstellung eines Steckverbinders,
- Fig. 10: eine perspektivische Darstellung der inneren Komponenten des in Figur 9 gezeigten Steckverbinders,
- Fig. 11: eine perspektivische Darstellung eines Doppel-Steckverbindungsmittels und zweier Steckverbinder,
- Fig. 12: eine perspektivische Darstellung der inneren Komponenten des in Figur 11 gezeigten Doppel-Steckverbindungsmittel und der Steckverbinder,
- Fig. 13: eine perspektivische Darstellung einer Anordnung zweier Solar-Dacheindeckungselemente an einer Dachlatte,
- Fig. 14: eine schematische Darstellung der Schaltung einer Anordnung von mehreren Solar-Dacheindeckungselementen.
- Fig. 15: eine perspektivische, teiltransparente Ansicht einer alternativen Ausführung eines Einstecksockels mit einem Induktionslötwerkzeug.

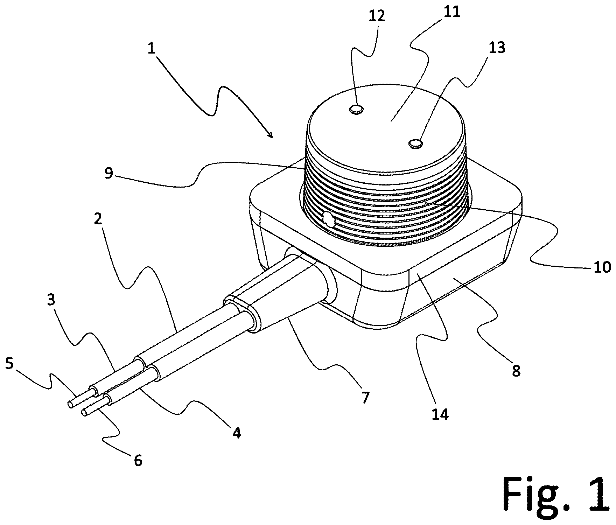

Die Figur 1 zeigt als perspektivische Ansicht den Einstecksockel 1, in den das zweiadrige Kabel 2 mündet. In dem Kabel 2 sind die beiden jeweils als Kupferdrähte mit Drahtisolierungen 3 und 4 ausgebildeten elektrischen Leitungen 5 und 6 innerhalb eines gemeinsamen Kabelmantels geführt. Der Einstecksockel 1 ist mit dem Knickschutz 7, dem quaderförmigen Einsteckflansch 8 und dem konusförmigen Einsteckabschnitt 9 ausgebildet. Im Bereich der Mantelfläche des Einsteckabschnitts 9 ist der Einstecksockel 1 mit der lamellenartigen Außenkulisse 10 ausgebildet. Auf seiner Oberseite bildet der Einstecksockel 1 den flachen Anschlusssockel 11, in welchem die Leitungen 5 und 6 auf der Deckfläche des Einsteckabschnitts 9 als Kontaktmittel 12 und 13 enden. Die Kontaktmittel 12 und 13 bilden die beiden zur Herstellung eines Stromflusses zu einem Solarmodul erforderlichen elektrischen Pole ab. Auf dem Einsteckflansch 8 ist die flächige Dichtung 14 angeordnet, welche aus Moosgummi gefertigt und auf ihrer Oberfläche mit einer (in Figur 1 nicht dargestellten) Klebebeschichtung ausgebildet ist.

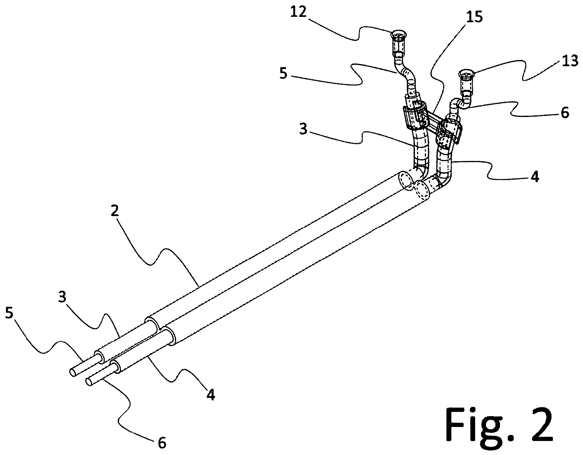

Die Figur 2 zeigt in einer perspektivischen Ansicht den Verlauf des Kabels 2 innerhalb des Einstecksockels 1. Die Leitungen 5 und 6 sind innerhalb des Einsteckabschnitts 9 mit der Doppelklammer 15 gehalten, welche an die Drahtisolierungen 3 und 4 angreift. Auf die Enden der als Kupferdrähte ausgeführten Leitungen 5 und 6 sind die beiden Kontaktmittel 12 und 13 aufgesetzt, welche jeweils als Kupferkörper mit einer Zinnbeschichtung ausgeführt sind. Die Kontaktmittel 12 und 13 sind im Anschlusssockel 11 mit einem geringfügigen axialen Verformungsspiel, ansonsten jedoch fest gehalten. Das geringfügige axiale Verformungsspiel der Leitungen 5 und 6 ergibt sich aus der geknickten Leitungsführung der Leitungen 5 und 6 zwischen der Doppelklammer 15 und den Kontaktmitteln 12 und 13 im Einsteckabschnitt 9 ist des Einstecksockels 1. Hierzu ragen die Kontaktmittel 12 und 13 zunächst geringfügig aus dem Anschlusssockel 11 heraus. Beim Auflegen eines Werkstücks mit korrespondierenden Kontakten geben die Leitungen 5 und 6 im Bereich der Leitungsknicke durch Verformung leicht nach. Diese Verformung ist teilweise plastisch (irreversibel) durch ein weiteres Verbiegen der Leitungen 5 und 6 im Knickbereich, teilweise jedoch auch elastisch (reversibel) aufgrund einer begrenzten Formelastizität der Leitungen 5 und 6 im Knickbereich. Aufgrund des elastischen Anteils der Verformungsbewegung wird ein sicherer Kontaktschluss der Kontaktmittel 12 und 13 zu den korrespondierenden Kontakten gewährleistet, indem durch die Leitungen 5 und 6 eine leichte Federkraft auf die Kontaktverbindung ausgeübt wird. Dies dient der Sicherstellung einer sauberen Lötverbindung der Kontaktmittel 12 und 13 mit den korrespondierenden Kontakten und der praktischen Erleichterung der Herstellung der Lötverbindung.

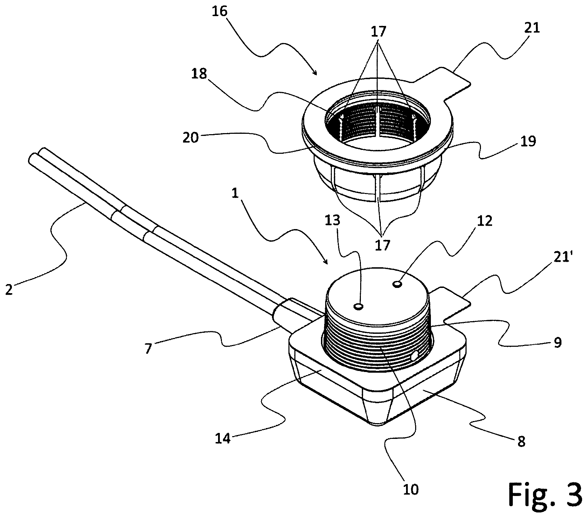

Die Figur 3 zeigt den Einstecksockel 1 mit der Außenhülse 16 in einer perspektivischen Explosionsdarstellung. Die Außenhülse 16 ist mit axialen Schlitzen 17, einer lamellenartigen Innenkulisse 18 und dem Halteflansch 19 ausgebildet. Auf dem Halteflansch 19 ist eine flächige Dichtung 20 angeordnet, welche aus Moosgummi gefertigt und auf ihrer Oberfläche mit einer (in Figur 3 nicht dargestellten) Klebebeschichtung ausgebildet ist. Die (in Figur 3 nicht dargestellten) Klebebeschichtungen der Dichtungen 14 und 20 sind mit jeweils mit den Schutzfolien 21 und 21' abgedeckt. Die durch die axialen Schlitze 17 gebildeten Segmente der Außenhülse 16 dienen dem Umgriff des Einsteckabschnitts 9 des Einstecksockels 1. Hierbei greifen die Lamellen der Innenkulisse 18 der Außenhülse 16 rastend an die Lamellen der korrespondierenden Außenkulisse 10 des Einsteckabschnitts 9 an.

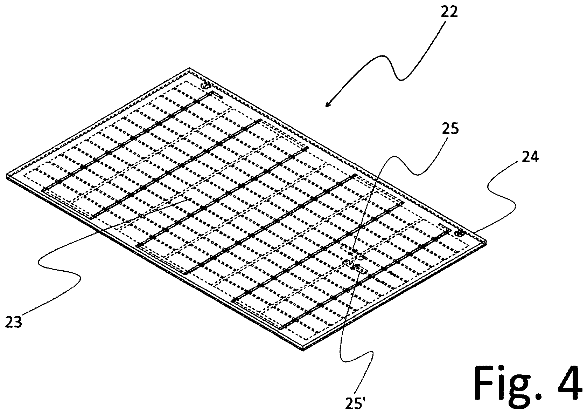

Die Figur 4 zeigt das Solarmodul 22 in einer teiltransparenten, perspektivischen Ansicht. Das Solarmodul 22 umfasst eine Zellmatrix 23, bestehend aus einer Vielzahl kleiner Solarzellen, die miteinander in Reihe geschaltet sind und eine darüber angeordnete Glasscheibe 24. Die Zellmatrix ist auf eine Leistungsabgabe unter Vollbelastung mit Strömen von etwa 0,2 A bei einer Spannung von 50 V ausgelegt. Zur Herstellung einer elektrischen Verbindung sind auf der Unterseite des Solarmoduls 22 zwei aus Metallplättchen gebildete Rückkontaktmittel 25 und 25' angeordnet und mit der Reihenschaltung der Zellmatrix 23 verbunden. Die Rückkontaktmittel 25 und 25' sind jeweils als Kupferkörper mit einer Zinnbeschichtung ausgeführt.

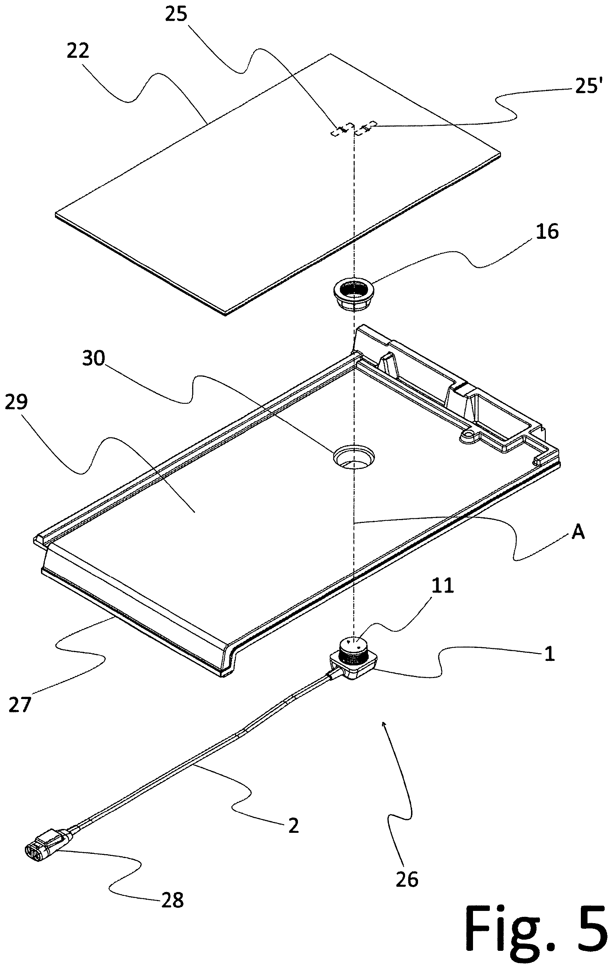

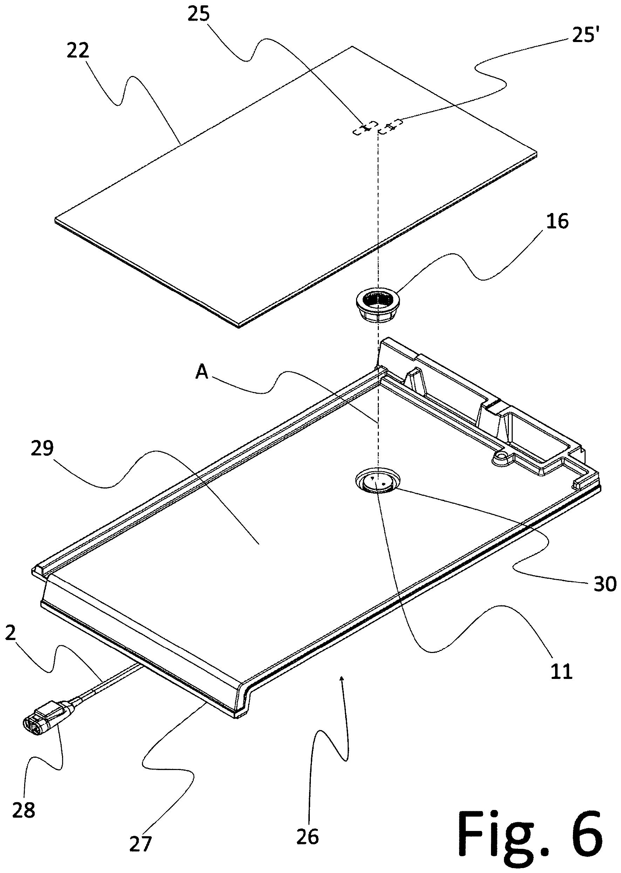

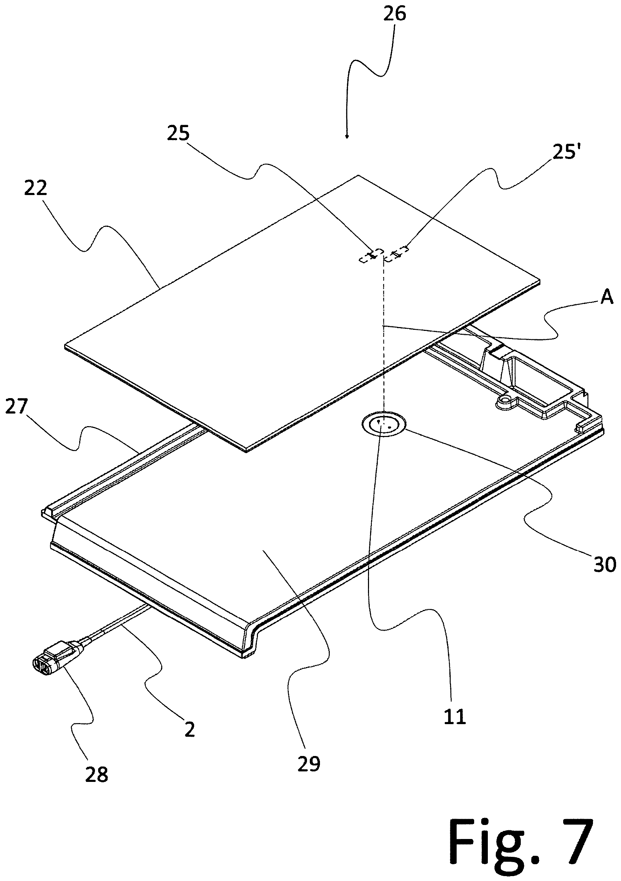

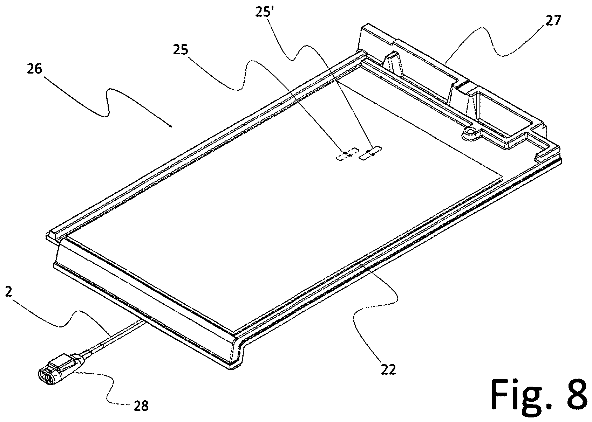

Die Figuren 5 bis 7 zeigen das Solar-Dacheindeckungselement 26 jeweils in perspektivischen Explosivdarstellungen. Die Figur 8 zeigt das fertig konfektionierte Solar-Dacheindeckungselement 26 in einer perspektivischen Darstellung. Das Solarmodul 22 ist in den Figuren 5 bis 8 jeweils nur schematisch eingezeichnet, die Zellmatrix 23 ist hierbei jeweils nicht dargestellt. Das Solar-Dacheindeckungselement 26 umfasst den Einstecksockel 1, den Grundkörper 27, die Außenhülse 16 und das Solarmodul 22. Das Kabel 2 des Einstecksockels ist unterhalb der Unterseite des Grundkörpers 27 in einem Abstand zu dieser an seinem Ende mit dem Steckverbinder 28 ausgebildet. Der Grundkörper 27 ist als flächiger, ziegelförmiger Dachstein ausgestaltet. Die Oberseite des Grundkörpers 27 weist eine Aufnahmefläche 29 für das Solarmodul 22 auf. Der Grundkörper 27 ist im Bereich der Aufnahmefläche 29 ferner mit einer senkrecht zu seiner Grundfläche verlaufenden Öffnung 30 ausgebildet. Zur Herstellung des Solar-Dacheindeckungselements 26 wird der Einstecksockel 1 in einem Werkstückträger (nicht dargestellt) fixiert, so dass der Anschlusssockel 11 nach oben ausgerichtet ist. Der Grundkörper 27 wird entlang der Einsteckachse A auf diesen aufgelegt, so dass der Einsteckabschnitt 9 des Einstecksockels 1 in die Öffnung 30 des Grundkörpers 27 aufgenommen und der Anschlusssockel 11 etwa auf der Ebene der Oberseite des Grundkörpers 27 angeordnet ist, wie dies in Figur 6 gezeigt ist. Hierbei ist der Einstecksockel 1 auf der Unterseite des Grundkörpers 27 in axialer Einsteckrichtung formschlüssig durch den Einsteckflansch 8 gehalten. Ferner ist hierbei die Dichtung 14 zur Abdichtung der elektrischen Verbindung gegen eindringende Feuchtigkeit von der Unterseite des Grundkörpers 27 zwischen dem Einsteckflansch 8 und der Unterseite des Grundkörpers 27 angeordnet. Danach wird, wie in Figur 7 dargestellt, die Außenhülse 16 in die Öffnung 30 eingesetzt, wobei die durch die axialen Schlitze 17 gebildeten Segmente der Außenhülse 16 den Einsteckabschnitt 9 des Einstecksockels 1 umgreifen und die Lamellen der Innenkulisse 18 der Außenhülse 16 rastend an die Lamellen der korrespondierenden Außenkulisse 10 des Einsteckabschnitts 9 angreifen. Hierbei ist der Einstecksockel 1 auf der Oberseite des Grundkörpers 27 entgegen der axialen Einsteckrichtung durch den Halteflansch 19 der Außenhülse 16 gehalten. Ferner ist hierbei zur Abdichtung der elektrischen Verbindung gegen Feuchtigkeit, die zwischen der Oberseite des Grundkörpers 27 und der Unterseite des Solarmoduls 22 eindringen kann, auf der Oberseite des Halteflanschs 19 der Außenhülse 16 die Dichtung 20 angeordnet. In Figur 8 ist das fertig konfektionierte Solar-Dacheindeckungselement 26 gezeigt, bei welchem das Solarmodul 22 auf die Aufnahmefläche 29 des Grundkörpers 27 aufgelegt ist. Hierbei sind die Rückkontaktmittel 25 und 25' formschlüssig auf den Kontaktmitteln 12 und 13 angeordnet, wobei aufgrund des axialen Verformungsspiels der Leitungen 5 und 6 im Einsteckabschnitt 9 ist des Einstecksockels 1 ein sicherer Kontaktschluss zwischen den Kontaktmitteln 12 und 13 und den Rückkontaktmitteln 25 und 25' gewährleistet ist. Zur Herstellung einer stabilen elektrischen Verbindung der Rückkontaktmittel 25 und 25' mit den Kontaktmitteln 12 und 13 erfolgt eine Erhitzung der gemeinsamen Kontaktflächen der Kontaktmittel 12, 13 mit den Rückkontaktmitteln 25, 25' bis zum Schmelzpunkt des Lotmittels durch das Solarmodul hindurch mittels eines Induktionslötverfahrens.

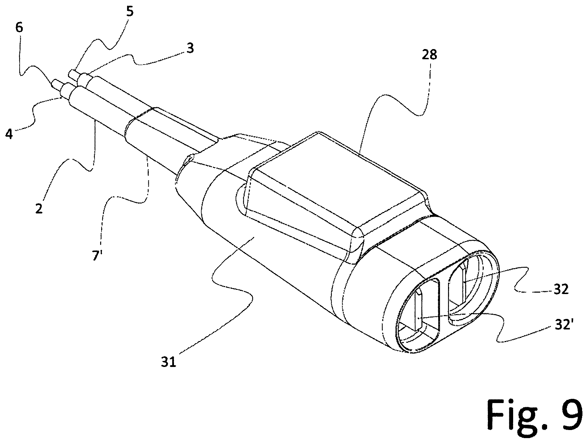

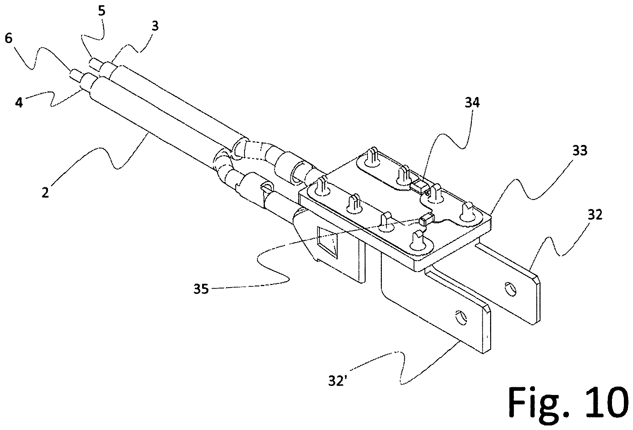

Figur 9 zeigt den Steckverbinder 28, welcher aus einem Spritzgussgehäuse 31 mit einem Knickschutz 7' gebildet ist und in welchem die Leitungen 5 und 6 als Kontakte 32 und 32' enden. Die Figur 10 zeigt die inneren Komponenten des Steckverbinders 28, in welchem die Leitungen 5 und 6 über die Platine 33 mit den Kontakten 32 und 32' verbunden sind. Die Kontakte 32 und 32' bilden die beiden zur Herstellung eines Stromflusses zwischen dem Solarmodul 22 und den weiteren elektrischen Komponenten einer Solar-Dachanlage erforderlichen elektrischen Pole ab. Innerhalb der Kontaktierung der Leitung 5 auf der Platine 33 ist als Rückstromsperre der Leitung 5 die Rückstromdiode 34 angeordnet. Dies verhindert einen Rückstrom in das mit der Leitung 5 verbundene Solarmodul 22. Zwischen den Kontakten der Leitungen 5 und 6 ist auf der Platine 33 der Kondensator 35 angeordnet. Dieser ermöglicht seine Detektierung mittels eines an die Kontakten 32 und 32' angelegten Wechselstromsignals. Der Anschluss eines über die Leitungen 5 und 6 innerhalb einer Solar-Dachanlage erfolgreich angeschlossenen Solarmoduls 22 kann mittels des Kondensators 35 einfach gezählt, bzw. detektiert werden. Im vorliegenden Ausführungsbeispiel kann ein geeigneter Kondensator mit einer Kapazität von 0,1 bis 100 nF ausgeführt sein.

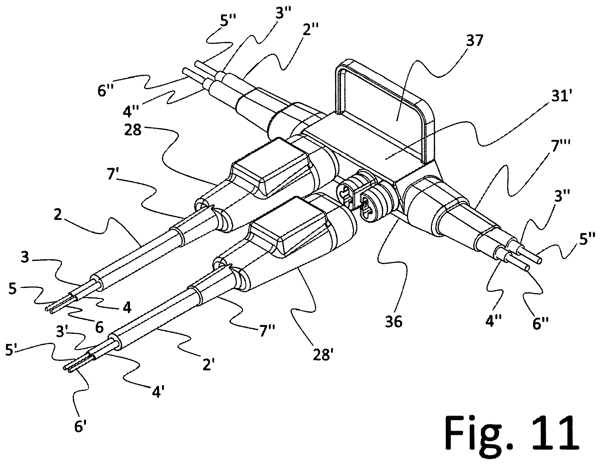

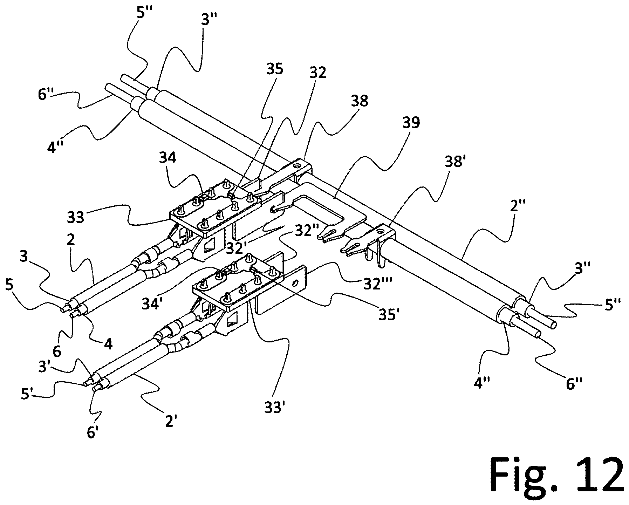

Die Figur 11 zeigen das als Doppel-Steckverbindungsmittel 36 ausgeführte Mehrfach-Steckverbindungsmittel, welches aus einem Spritzgussgehäuse 31' mit Knickschützen 7‴ und 7ʺʺ gebildet und mit den Steckverbindern 28 und 28' verbunden ist. Das Doppel-Steckverbindungsmittel 36 dient dem Anschluss der Steckverbinder 28 und 28' an die Hauptleitungen 5" und 6" des Hauptkabels 2". Das Spritzgussgehäuse 31' des Doppel-Steckverbindungsmittels 36 weist eine Montagelasche 37 auf, mit welcher es bei der Dachmontage an der Dachkonstruktion verbindbar ist. Die Montagelasche 37 kann hierzu an Komponenten der Dachkonstruktion - zum Beispiel den Dachlatten - verschraubt, genagelt oder mittels Klammern festgeheftet werden. Die Figur 12 zeigt die inneren Komponenten des Doppel-Steckverbindungsmittels 36 und der Steckverbinder 28 und 28'. Hierbei ist die Leitung 5 des Steckverbinders 28 über die Platine 33, den Kontakt 32 und den als Schneid-Klemmkontakt 38 ausgeführten Durchdringungskontakt mit der Hauptleitung 5" verbunden. Die Hauptleitung 5" bildet den Pluskontakt des elektrischen Systems ab. Die Leitung 6 ist über die Platine 33, den Kontakt 32' mit dem Reihenschaltungskontakt 39 verbunden und über diesen und den Kontakt 32" und die Platine 33' des Steckverbinders 28' mit der Leitung 5' des Steckverbinders 28' verbindbar. Die Leitung 6' des Steckverbinders 28' ist über die Platine 33', den Kontakt 32‴ und den Schneid-Klemmkontakt 38' mit der Hauptleitung 6" verbindbar. Die Hauptleitung 6" bildet den Minuskontakt des elektrischen Systems ab. Zwei über die Steckverbinder 28 und 28' an die Hauptleitungen 5" und 6" angeschlossene Solar-Dacheindeckungselemente sind über das Doppel-Steckverbindungsmittel 36 mithin als gemeinsame Gruppe - hier als Paar - miteinander in Reihe geschaltet. Durch die Bereitstellung mehrerer Reihenschaltungskontakte ist das Doppel-Steckverbindungsmittel 36 einfach als Mehrfach-Steckverbindungsmittel ausgestaltbar, über welches jeweils entsprechend mehr Dacheindeckungselemente jeweils gruppenweise miteinander in Reihe geschaltet werden können. Mehrere über zusätzliche Doppel- oder Mehrfach-Steckverbindungsmittel mit den Hauptleitungen 5" und 6" verbundene Solar-Dacheindeckungselement-Paare oder - Gruppen sind über die Hauptleitungen 5" und 6" miteinander parallel geschaltet.

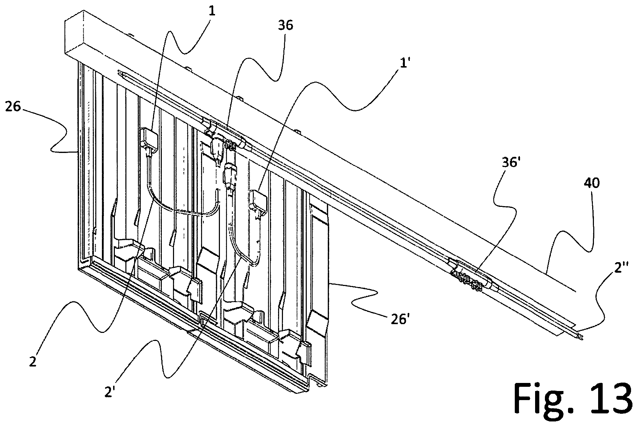

Die Figur 13 zeigt eine Anordnung von zwei Solar-Dacheindeckungselementen 26 und 26' in einer hängenden Montage an einer Dachlatte 40. Die Solar-Dacheindeckungselemente 26 und 26' sind über das Doppel-Steckverbindungsmittel 36 mit den Hauptkabel 2" verbunden und hierbei als Paar miteinander in Reihe geschaltet. Die Einstecksockel 1 und 1' sind hierbei derart angeordnet, dass eine etwaige, durch Kondenswasser gebildete Feuchtigkeit an den Kabeln 2 und 2' abtropfen kann, ohne in die Einstecksockel 1 und 1' einzudringen. Eine weiteres Solar-Dacheindeckungselement-Paar, das über das weitere Doppel-Steckverbindungsmittel 36' mit den Hauptleitungen 5" und 6" verbindbar ist, ist mit dem Solar-Dacheindeckungselement-Paar 26/26' über das Doppel-Steckverbindungsmittel 36' parallel schaltbar.

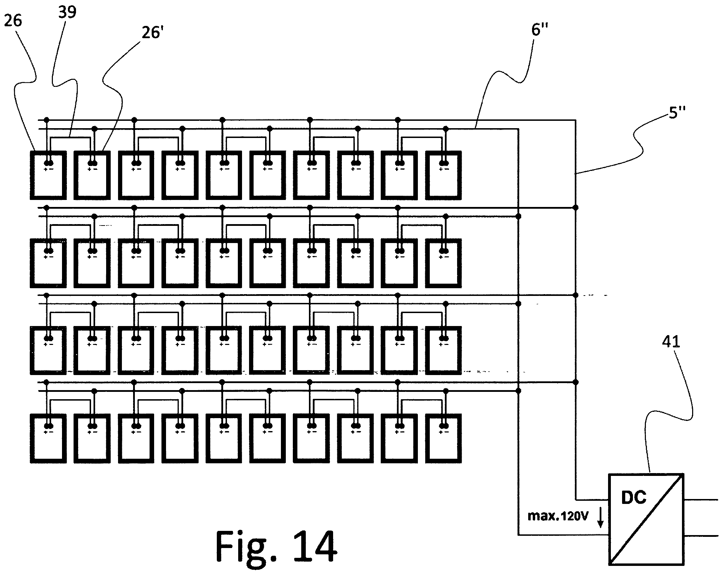

Die Figur 14 zeigt eine schematische Schaltung einer Anordnung von mehreren Solar-Dacheindeckungselementen als Solar-Dachanlage. Die einzelnen Solar-Dacheindeckungselemente sind hierbei jeweils paarweise über Reihenschaltungskontakte mit den Hauptleitungen 5" und 6" verbunden und hierbei miteinander jeweils in Reihe geschaltet. Im Schaltplan gemäß Figur 14 sind insoweit beispielhaft die Solar-Dacheindeckungselemente 26 und 26' und der Reihenschaltungskontakt 39 beziffert. Die einzelnen miteinander jeweils in Reihe geschalteten Solar-Dacheindeckungselement-Paare sind über die Reihenschaltungskontakte und die Hauptleitungen 5" und 6" hierbei jeweils miteinander parallel geschaltet. Die Anordnung ist insgesamt auf eine Gesamtspannung von maximal 120 V ausgelegt. Die Hauptleitungen 5" und 6" sind mit dem Wandler 41 verbunden, der je nach gewünschter Funktionalität und Auslegung der Solar-Dachanlage beispielsweise ein Wechselrichter, ein MPP-Tracker oder ein Laderegler sein kann.

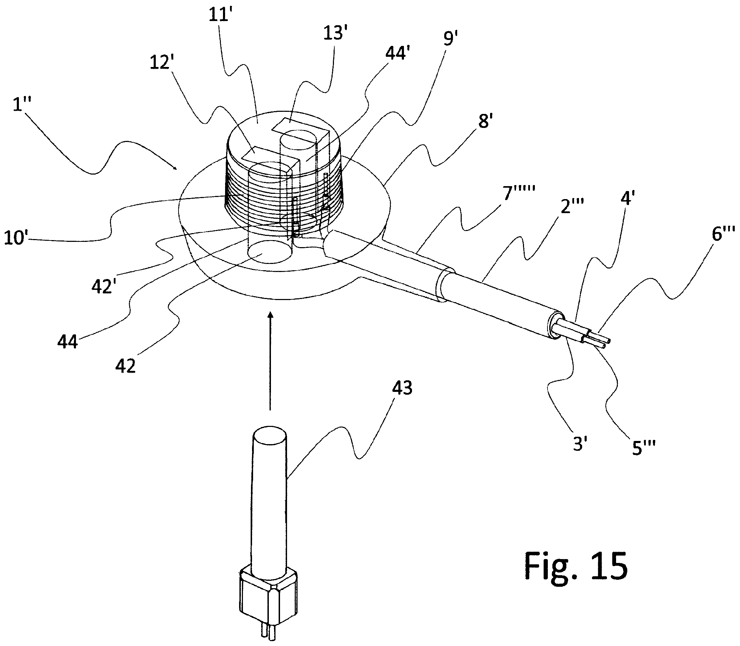

Die Figur 15 zeigt als perspektivische, teiltransparente Ansicht den Einstecksockel 1", in den das zweiadrige Kabel 2‴ mündet. In dem Kabel 2‴ sind die beiden jeweils als Kupferdrähte mit Drahtisolierungen 3' und 4' ausgebildeten elektrischen Leitungen 5‴ und 6‴ innerhalb eines gemeinsamen Kabelmantels geführt. Der Einstecksockel 1" ist mit dem Knickschutz 7‴‴, dem runden Einsteckflansch 8' und dem konusförmigen Einsteckabschnitt 9' ausgebildet. Im Bereich der Mantelfläche des Einsteckabschnitts 9' ist der Einstecksockel 1" mit der lamellenartigen Außenkulisse 10' ausgebildet. Auf seiner Oberseite bildet der Einstecksockel 1" den flachen Anschlusssockel 11', in welchem die Leitungen 5‴ und 6‴ auf der Deckfläche des Einsteckabschnitts 9' als Kontaktmittel 12' und 13' enden. Die Kontaktmittel 12' und 13' bilden die beiden zur Herstellung eines Stromflusses zu einem Solarmodul erforderlichen elektrischen Pole ab und sind mit einer Lotbeschichtung ausgeführt. Der Einstecksockel 1" ist ferner mit zwei innenliegenden Einführkanälen 44 und 44' ausgebildet, die jeweils über Zugangsöffnungen 42, 42' auf der Unterseite des Einstecksockels 1" zugänglich sind. An ihren oberen Enden enden die Einführkanäle 44 und 44' jeweils in einem Wirkabstand zu den Kontaktmitteln 12' und 13'. Der Wirkabstand ist hierbei derart gewählt, dass durch ein in die Einführkanäle 44 und 44' jeweils formschlüssig eingeführtes, fingerförmiges Induktionslötwerkzeug 43 jeweils ein ausreichender Energieeintrag auf die Kontaktmittel 12' und 13' zum Schmelzen ihrer Lotbeschichtung oder zusätzlich der Lotbeschichtung von auf den Kontaktmittel 12' und 13' angeordneten Rückkontaktmitteln gewährleistet ist. Das Induktionslötwerkzeug 43 kann zur Herstellung einer Lotverbindung sukzessive in die Einführkanäle 44 und 44' eingeführt werden. Alternativ können auch zwei Induktionslötwerkzeuge gleichzeitig parallel in die Einführkanäle 44 und 44' eingeführt werden. Anstatt mit zwei getrennten Einführkanälen 44 und 44' kann der Einstecksockel 1" ferner auch mit ein gemeinsamen Einführkanal für beide Kontaktmittel 12' und 13' ausgebildet sein. Die Kontaktmittel 12' und 13' werden dann durch ein einziges entsprechend dimensioniertes Induktionslötwerkzeug gleichzeitig erwärmt.

### Bezugszeichenliste

- 1, 1', 1": Einstecksockel
- 2, 2', 2‴: Kabel
- 2": Hauptkabel
- 3, 3', 4. 4': Drahtisolierung
- 5, 5', 5"', 6, 6', 6‴: Leitung
- 5", 6": Hauptleitung
- 7, 7', 7", 7‴, 7ʺʺ, 7‴ʺ: Knickschutz
- 8, 8': Einsteckflansch
- 9, 9': Einsteckabschnitt
- 10, 10': Außenkulisse
- 11, 11': Anschlusssockel
- 12, 12', 13, 13': Kontaktmittel
- 14, 20: Dichtung
- 15: Doppelklammer
- 16: Außenhülse
- 17: Schlitze
- 18: Innenkulisse
- 19: Halteflansch
- 21, 21': Schutzfolie
- 22: Solarmodul
- 23: Zellmatrix
- 24: Glasscheibe
- 25, 25': Rückkontaktmittel
- 26, 26': Solar-Dacheindeckungselement
- 27: Grundkörper
- 28, 28': Steckverbinder
- 29: Aufnahmefläche
- 30: Öffnung
- 31, 31': Spritzgussgehäuse
- 32, 32', 32", 32‴: Kontakt
- 33, 33': Platine
- 34: Rückstromdiode
- 35: Kondensator
- 36: Doppel-Steckverbindungsmittel
- 37: Montagelasche
- 38, 38': Schneid-Klemmkontakt
- 39: Reihenschaltungskontakt
- 40: Dachlatte
- 41: Wandler
- 42, 42': Zugangsöffnung
- 43: Induktionslötwerkzeug
- 44, 44': Einführkanal

## Patentansprüche

1. Dacheindeckungselement mit einem flächigen Grundkörper (27), dessen Oberseite eine Aufnahmefläche (29) für ein Solarmodul (22) aufweist und der eine senkrecht zu seiner Grundfläche verlaufende Öffnung (30) oder Bohrung aufweist, durch die mindestens zwei elektrische Leitungen (5, 5', 5",' 6, 6', 6‴) gemeinsam geführt sind, wobei die Leitungen (5, 5', 5"', 6, 6', 6‴) auf der Oberseite des Grundkörpers (27) im Bereich der Aufnahmefläche (29) als Kontaktmittel (12, 12', 13, 13') enden, die in einem gemeinsamen flachen Anschlusssockel (11, 11') gehalten oder axialbeweglich geführt sind, **dadurch gekennzeichnet, dass** die elektrischen Leitungen (5, 5', 5‴, 6, 6', 6‴) in einem gemeinsamen Einstecksockel (1, 1', 1") von der Unterseite durch die Öffnung (30) oder Bohrung geführt sind, wobei der Einstecksockel (1, 1', 1") auf der Unterseite des Grundkörpers (27) in axialer Einsteckrichtung formschlüssig durch einen Einsteckflansch (8, 8') und auf der Oberseite des Grundkörpers (27) gegen seine axiale Einsteckrichtung form- und/oder kraftschlüssig durch ein Arretierungsmittel gehalten ist und auf der Oberseite des Grundkörpers (27) den Anschlusssockel (11, 11') bildet.

2. Dacheindeckungselement nach Anspruch 1, **dadurch gekennzeichnet, dass** zwischen dem Einsteckflansch (8, 8') und der Unterseite des Grundkörpers (27) ein Dichtungselement angeordnet ist.

3. Dacheindeckungselement nach Anspruch 1 oder 2, **dadurch gekennzeichnet, dass** das Arretierungsmittel eine Klammer oder ein Sprengring ist.

4. Dacheindeckungselement nach Anspruch 1 oder 2, **dadurch gekennzeichnet, dass** das Arretierungsmittel ein Hohlelement ist, das mit einem auf der Oberseite des Grundkörpers (27) gegen die axiale Einsteckrichtung des Einstecksockels (1, 1', 1") wirkenden Halteflansch (19) ausgebildet ist und das mit einer Innenkulisse (18) formschlüssig oder form- und kraftschlüssig an eine korrespondierende Außenkulisse (10, 10') des Einstecksockels (1, 1', 1") angreift.

5. Dacheindeckungselement nach Anspruch 4, **dadurch gekennzeichnet, dass** das Hohlelement eine Außenhülse (16) ist, die mit einer Schraubverbindung oder einer Steck-Drehverbindung an einen korrespondierenden Einsteckabschnitt des Einstecksockels angreift.

6. Dacheindeckungselement nach Anspruch 4, **dadurch gekennzeichnet, dass** das Hohlelement eine in axialer Einsteckrichtung geschlitzte Außenhülse (16) ist, die rastend an einen korrespondierenden Einsteckabschnitt (9, 9') des Einstecksockels (1, 1', 1") angreift.

7. Dacheindeckungselement nach einem der Ansprüche 4 bis 6, **dadurch gekennzeichnet, dass** auf der Oberseite des Halteflansches (19) ein Dichtungselement angeordnet ist.

8. Dacheindeckungselement nach einem der Ansprüche 1 bis 7, **dadurch gekennzeichnet, dass** die Kontaktmittel (12, 12', 13, 13') aus dem Anschlusssockel (11) herausragen und in diesem gegen die Einsteckrichtung federbelastet geführt sind.

9. Dacheindeckungselement nach einem der Ansprüche 1 bis 7, **dadurch gekennzeichnet, dass** die Kontaktmittel (12, 12', 13, 13') im Anschlusssockel fest oder mit einem axialen Verformungsspiel gehalten sind.

10. Dacheindeckungselement nach Anspruch 9, **dadurch gekennzeichnet, dass** die Kontaktmittel (12, 12', 13, 13') aus einem Lotmaterial gebildet oder mit einer Lotbeschichtung ausgebildet sind.

11. Dacheindeckungselement nach einem der Ansprüche 1 bis 7, 9 oder 10, **dadurch gekennzeichnet, dass** der Einstecksockel (1, 1', 1") mit einem Einführkanal oder zwei Einführkanälen (44, 44') für ein Lötwerkzeug ausgebildet ist, welcher oder welche über eine Zugangsöffnung (42, 42') auf der Unterseite des Einstecksockels zugänglich ist oder sind und über welchen oder welche ein Kontakt zu den Kontaktmitteln (12, 12', 13, 13') herstellbar ist.

12. Dacheindeckungselement nach Anspruch 11, **dadurch gekennzeichnet, dass** der Einführkanal oder die Einführkanäle (44, 44') an seinem oder ihrem oberen Ende in einem Wirkabstand zu den Kontaktmitteln (12, 13) endet oder enden und in den Einführkanal oder die Einführkanäle (44, 44') ein Induktionslötwerkzeug (43) einführbar ist.

13. Dacheindeckungselement nach einem der Ansprüche 1 bis 12, **dadurch gekennzeichnet, dass** die Leitungen (5, 5', 5‴, 6, 6', 6‴) auf der Unterseite des Grundkörpers (27) oder unterhalb der Unterseite in einem Abstand zu dieser als Kontakte (32, 32', 32", 32‴) in einem mehrpoligen Steckverbinder (28, 28') enden.

14. Dacheindeckungselement nach einem der Ansprüche 1 bis 13, **dadurch gekennzeichnet, dass** ein Kondensator (35) vorgesehen ist, der zwischen den die beiden elektrischen Pole bildenden Leitungen (5, 5', 5"', 6, 6', 6"'), Kontakten (32, 32', 32", 32‴) oder Kontaktmitteln (12, 12', 13, 13') angeschlossen ist.

15. Dacheindeckungselement nach einem der Ansprüche 1 bis 14, **dadurch gekennzeichnet, dass** in der oder den wenigstens einen elektrischen Pol bildenden Leitung oder Leitungen (5, 5', 5"', 6, 6', 6"') eine Rückstromdiode (34) angeordnet ist.

16. Dacheindeckungselement nach Anspruch 13 und einem oder beiden der Ansprüche 14 und/oder 15, **dadurch gekennzeichnet, dass** der Kondensator (35) und/oder die Rückstromdiode (34) innerhalb des Steckverbinders (28, 28') angeordnet ist oder sind.

17. Solar-Dacheindeckungselement (26, 26'), aufweisend ein Dacheindeckungselement nach einem der Ansprüche 1 bis 16 und ein auf der Oberseite des Grundkörpers (27) angeordnetes Solarmodul (22), **dadurch gekennzeichnet, dass** das Solarmodul (22) auf seiner der Oberseite des Grundkörpers (27) zugewandten Seite Rückkontaktmittel (25, 25') aufweist, die korrespondierend zu den Kontaktmitteln (12, 13) angeordnet sind.

18. Solar-Dacheindeckungselement (26, 26') nach Anspruch 17, wobei die Kontaktmittel (12, 12', 13, 13') im Anschlusssockel (11, 11') fest oder mit einem axialen Verformungsspiel gehalten sind, **dadurch gekennzeichnet, dass** die Rückkontaktmittel (25, 25') aus einem Lotmaterial gebildet oder mit einer Lotbeschichtung ausgebildet sind.

19. Solar-Dacheindeckungselement (26, 26') nach Anspruch 17 oder 18, **dadurch gekennzeichnet, dass** das Solarmodul (22) eine Zellmatrix (23) aus mehreren in Reihe geschalteten Solarzellen aufweist.

20. Solar-Dacheindeckungselement (26, 26') nach Anspruch 19, **dadurch gekennzeichnet, dass** das Format, die Anzahl und die Anordnung der Solarzellen derart gewählt sind, dass die verfügbare Aufnahmefläche (29) des Grundkörpers (27) unter gleichzeitiger Berücksichtigung der gewünschten Gesamtspannung möglichst weit abgedeckt ist.

21. Solar-Dacheindeckungselement (26, 26') nach einem der Ansprüche 17 bis 20, **dadurch gekennzeichnet, dass** seine die Dachhaut bildende Oberseite eine Glasscheibe (24) oder eine Kunststoffscheibe oder -folie ist.

22. Anordnung von Solar-Dacheindeckungselementen (26, 26') nach einem der Ansprüche 17 bis 21, **dadurch gekennzeichnet, dass** die Solar-Dacheindeckungselemente (26, 26') in einer Parallelschaltung miteinander verbunden sind.

23. Anordnung von Solar-Dacheindeckungselementen (26, 26') nach einem der Ansprüche 17 bis 21, **dadurch gekennzeichnet, dass** jeweils mindestens zwei Solar-Dacheindeckungselemente (26, 26') gruppenweise in einer Reihenschaltung miteinander verbunden sind und die in Reihe geschalteten Solar-Dacheindeckungselement-Gruppen in einer Parallelschaltung miteinander verbunden sind.

24. Anordnung von Solar-Dacheindeckungselementen (26, 26') nach Anspruch 23, **dadurch gekennzeichnet, dass** die Anzahl der gruppenweise in einer Reihenschaltung miteinander verbunden Solar-Dacheindeckungselemente (26, 26') auf eine Gesamtspannung von maximal 80 V bis 120 V ausgelegt ist.

25. Anordnung von Solar-Dacheindeckungselementen (26, 26') nach Anspruch 23 oder 24, wobei die Leitungen (5, 5', 5"', 6, 6', 6"') der Solar-Dacheindeckungselemente jeweils unterhalb der Unterseite des Grundkörpers in einem mehrpoligen Steckverbinder (28, 28') enden, **dadurch gekennzeichnet, dass** die Solar-Dacheindeckungselemente (26, 26') mit ihren Steckverbindern (28, 28') jeweils gruppenweise über ein gemeinsames Mehrfach-Steckverbindungsmittel miteinander verbindbar und in Reihe schaltbar sind, wobei die Reihenschaltung durch eine geeignete Leitungsführung im inneren des Mehrfachsteckverbindungsmittels hergestellt wird, und die Solar-Dacheindeckungselement-Gruppen über die Mehrfach-Steckverbindungsmittel jeweils mit Hauptleitungen (5", 6") verbindbar und hierbei miteinander parallel schaltbar sind.

26. Anordnung von Solar-Dacheindeckungselementen (26, 26') nach Anspruch 25, **dadurch gekennzeichnet, dass** die Mehrfach-Steckverbindungsmittel jeweils mit zwei Durchdringungskontakten an je zwei unterschiedliche elektrische Pole der Hauptleitungen (5", 6") angreifen.

27. Verfahren zur Herstellung eines Solar-Dacheindeckungselements (26, 26') nach einem der Ansprüche 17 bis 21, wobei die Kontaktmittel (12, 12', 13, 13') aus dem Anschlusssockel (11, 11') herausragen und in diesem gegen die Einsteckrichtung federbelastet geführt sind, **dadurch gekennzeichnet, dass** das Solarmodul auf der Aufnahmefläche (29) angeordnet wird, wobei ein Kraftschluss zwischen den Kontaktmitteln (12, 12', 13, 13') und den Rückkontaktmitteln (25, 25') gegen die Federbelastung der Kontaktmittel (12, 12', 13, 13') hergestellt wird.

28. Verfahren zur Herstellung eines Solar-Dacheindeckungselements (26, 26') nach einem der Ansprüche 17 bis 21, wobei die Kontaktmittel (12, 12', 13, 13') im Anschlusssockel fest oder mit einem axialen Verformungsspiel gehalten sind und die Kontaktmittel (12, 12', 13, 13') und/oder die Rückkontaktmittel (25, 25') aus einem Lotmaterial gebildet oder mit einer Lotbeschichtung ausgebildet sind, **dadurch gekennzeichnet, dass** das Solarmodul (22) auf der Aufnahmefläche (29) angeordnet und eine Erhitzung der gemeinsamen Kontaktflächen der Kontaktmittel (12, 12', 13, 13') mit den Rückkontaktmitteln (25, 25') bis zum Schmelzpunkt des Lots mittels eines Energieeintrags durch das Solarmodul (22) hindurch bewirkt wird.

29. Verfahren nach Anspruch 28, **dadurch gekennzeichnet, dass** der Energieeintrag durch Induktionslöten erfolgt.

30. Verfahren zur Herstellung eines Solar-Dacheindeckungselements (26, 26') nach einem der Ansprüche 17 bis 21, wobei die Kontaktmittel (12, 12', 13, 13') im Anschlusssockel fest oder mit einem axialen Verformungsspiel gehalten sind und die Kontaktmittel (12, 12', 13, 13') und/oder die Rückkontaktmittel (25, 25') aus einem Lotmaterial gebildet oder mit einer Lotbeschichtung ausgebildet sind und wobei der Einstecksockel mit einem Einführkanal oder zwei Einführkanälen (44, 44') für ein Lötwerkzeug ausgebildet ist, welcher oder welche über eine Zugangsöffnung (42, 42') auf der Unterseite des Einstecksockels zugänglich ist oder sind und über welchen oder welche ein Kontakt zu den Kontaktmitteln herstellbar ist, **dadurch gekennzeichnet, dass** das Solarmodul (22) auf der Aufnahmefläche (29) angeordnet und eine Erhitzung der gemeinsamen Kontaktflächen der Kontaktmittel (12, 12', 13, 13') mit den Rückkontaktmitteln (25, 25') bis zum Schmelzpunkt des Lots durch ein in den Einführkanal oder sukzessiv in die Einführkanäle (44, 44') eingeführtes Lötwerkzeug oder zwei gleichzeitig parallel in die Einführkanäle (44, 44') eingeführte Lötwerkzeuge bewirkt wird.

31. Verfahren nach Anspruch 30, **dadurch gekennzeichnet, dass** das der Einführkanal oder die Einführkanäle (44, 44') an seinem oder ihrem oberen Ende in einem Wirkabstand zu den Kontaktmitteln (12, 12', 13, 13') endet oder enden, und der und eine Erhitzung der gemeinsamen Kontaktflächen der Kontaktmittel (12, 12', 13, 13') mit den Rückkontaktmitteln (25, 25') bis zum Schmelzpunkt des Lots durch ein in den Einführkanal oder sukzessiv in die Einführkanäle (44, 44') eingeführtes Induktionslötwerkzeug (43) oder zwei gleichzeitig parallel in die Einführkanäle (44, 44') eingeführte Induktionslötwerkzeuge (43) bewirkt wird.

## Claims

1. Roof covering element comprising a flat main part (27), the upper face of which has a receiving surface (29) for a solar module (22) and which has an opening (30) or a bore running perpendicularly to the main surface thereof, through which opening or bore at least two electrical lines (5, 5', 5‴, 6, 6', 6‴) are guided together, the lines (5, 5', 5‴, 6, 6', 6‴) ending on the upper face of the main part (27) in the region of the receiving surface (29) as contact means (12, 12', 13, 13') which are held or axially movably guided in a common flat connection socket (11, 11'), **characterized in that** the electrical lines (5, 5', 5"', 6, 6', 6‴) are guided in a common plug-in socket (1, 1', 1‴) from the lower face through the opening (30) or the bore, the plug-in socket (1, 1', 1‴) being held in an interlocking manner on the lower face of the main part (27) in the axial plug-in direction by a plug-in flange (8, 8') and being held in an interlocking and/or force-fitting manner on the upper face of the main part (27) against its axial plug-in direction by a locking means and forming the connection socket (11, 11') on the upper face of the main part (27).

2. Roof covering element according to claim 1, **characterized in that** a sealing element is arranged between the plug-in flange (8, 8') and the lower face of the main part (27).

3. Roof covering element according to either claim 1 or claim 2,
**characterized in that** the locking means is a clamp or a snap ring.

4. Roof covering element according to either claim 1 or claim 2,
**characterized in that** the locking means is a hollow element which is formed with a retaining flange (19) acting on the upper face of the main part (27) against the axial plug-in direction of the plug-in socket (1, 1', 1") and which engages, with an inner connecting link (18), in an interlocking or interlocking and force-fitting manner with a corresponding outer connecting link (10, 10') of the plug-in socket (1, 1', 1").

5. Roof covering element according to claim 4, **characterized in that** the hollow element is an outer sleeve (16) which engages, with a screw connection or a plug-in rotary connection, with a corresponding plug-in portion of the plug-in socket.

6. Roof covering element according to claim 4, **characterized in that** the hollow element is an outer sleeve (16) which is slotted in the axial plug-in direction and which engages in a latching manner with a corresponding plug-in portion (9, 9') of the plug-in socket (1, 1', 1").

7. Roof covering element according to any of claims 4 to 6,
**characterized in that** a sealing element is arranged on the upper face of the retaining flange (19).

8. Roof covering element according to any of claims 1 to 7,
**characterized in that** the contact means (12, 12', 13, 13') protrude from the connection socket (11) and are guided against the plug-in direction in this connection socket in a spring-loaded manner.

9. Roof covering element according to any of claims 1 to 7,
**characterized in that** the contact means (12, 12', 13, 13') are held in the connection socket firmly or with an axial deformation clearance.

10. Roof covering element according to claim 9, **characterized in that** the contact means (12, 12', 13, 13') are formed from a solder material or are designed with a solder coating.

11. Roof covering element according to any of claims 1 to 7, 9 or 10, **characterized in that** the plug-in socket (1, 1', 1") is designed with one insertion channel or two insertion channels (44, 44') for a soldering tool, which is or are accessible via an access opening (42, 42') on the lower face of the plug-in socket and via which contact with the contact means (12, 12', 13, 13') can be established.

12. Roof covering element according to claim 11, **characterized in that** the insertion channel or the insertion channels (44, 44') ends or end at an effective distance from the contact means (12, 13) and an induction soldering tool (43) can be inserted into the insertion channel or the insertion channels (44, 44').

13. Roof covering element according to any of claims 1 to 12,
**characterized in that** the lines (5, 5', 5‴, 6, 6', 6‴) end on the lower face of the main part (27) or below the lower face in a distance thereto as contacts (32, 32', 32", 32‴) in a multi-pole plug connector (28, 28').

14. Roof covering element according to any of claims 1 to 13,
**characterized in that** a capacitor (35) is provided which is connected between the lines (5, 5', 5"', 6, 6', 6‴), contacts (32, 32', 32", 32‴) or contact means (12, 12', 13, 13') which form the two electric poles.

15. Roof covering element according to any of claims 1 to 14,
**characterized in that** a reverse current diode (34) is arranged in the line or lines (5, 5', 5‴, 6, 6', 6‴) which form at least one electric pole.

16. Roof covering element according to claim 13 and one or both of claims 14 and/or 15, **characterized in that** the capacitor (35) and/or the reverse current diode (34) is or are arranged within the plug connector (28, 28').

17. Solar roof covering element (26, 26'), having a roof covering element according to any of claims 1 to 16 and a solar module (22) arranged on the upper face of the main part (27), **characterized in that** the solar module (22) has, on its face facing the upper face of the main part (27), back contact means (25, 25') which are arranged corresponding to the contact means (12, 13).

18. Solar roof covering element (26, 26') according to claim 17, the contact means (12, 12', 13, 13') in the connection socket (11, 11') being held firmly or with an axial deformation clearance, **characterized in that** the back contact means (25, 25') are formed from a solder material or are designed with a solder coating.

19. Solar roof covering element (26, 26') according to either claim 17 or claim 18, **characterized in that** the solar module (22) has a cell matrix (23) made up of several solar cells connected in series.

20. Solar roof covering element (26, 26') according to claim 19, **characterized in that** the format, the number and the arrangement of the solar cells are selected such that the available receiving surface (29) of the main part (27) is covered as much as possible while simultaneously taking into account the desired total voltage.

21. Solar roof covering element (26, 26') according to any of claims 17 to 20,
**characterized in that** its upper face forming the roof skin is a glass pane (24) or a plastics pane or film.

22. Assembly of solar roof covering elements (26, 26') according to any of claims 17 to 21, **characterized in that** the solar roof covering elements (26, 26') are interconnected in a parallel connection.

23. Assembly of solar roof covering elements (26, 26') according to any of claims 17 to 21, **characterized in that** at least two solar roof covering elements (26, 26') are in each case interconnected in groups in a series connection and the solar roof covering element groups connected in series are interconnected in a parallel connection.

24. Assembly of solar roof covering elements (26, 26') according to claim 23,
**characterized in that** the number of solar roof covering elements (26, 26') interconnected in groups in a series connection is designed for a total voltage of a maximum of 80 V to 120 V.

25. Assembly of solar roof covering elements (26, 26') according to either claim 23 or claim 24, the lines (5, 5', 5‴, 6, 6', 6‴) of the solar roof covering elements each ending below the lower face of the main part in a multi-pole plug connector (28, 28'), **characterized in that** the solar roof covering elements (26, 26') can, with their plug connectors (28, 28'), each be interconnected and connected in series in groups via a common multiple plug connection means, the series connection being established by a suitable line routing inside the multiple plug connection means, and the solar roof covering element groups each being able to be connected to main lines (5", 6") via the multiple plug connection means and thereby connected in parallel with one another.

26. Assembly of solar roof covering elements (26, 26') according to claim 25,
**characterized in that** the multiple plug connection means each engage with two penetration contacts on two different electric poles of the main lines (5", 6").

27. Method for producing a solar roof covering element (26, 26') according to any of claims 17 to 21, the contact means (12, 12', 13, 13') protruding from the connection socket (11, 11') and being guided against the plug-in direction in this connection socket in a spring-loaded manner, **characterized in that** the solar module is arranged on the receiving surface (29), a force-fitting connection between the contact means (12, 12', 13, 13') and the back contact means (25, 25') being established against the spring loading of the contact means (12, 12', 13, 13').

28. Method for producing a solar roof covering element (26, 26') according to any of claims 17 to 21, the contact means (12, 12', 13, 13') being held in the connection socket firmly or with an axial deformation clearance and the contact means (12, 12', 13, 13') and/or the back contact means (25, 25') being formed from a solder material or beind designed with a solder coating,
**characterized in that** the solar module (22) is arranged on the receiving surface (29) and the common contact surfaces of the contact means (12, 12', 13, 13') with the back contact means (25, 25') are heated up to the melting point of the solder by means of an energy input through the solar module (22).

29. Method according to claim 28, **characterized in that** the energy input takes place by induction soldering.

30. Method for producing a solar roof covering element (26, 26') according to any of claims 17 to 21, the contact means (12, 12', 13, 13') being held in the connection socket firmly or with an axial deformation clearance and the contact means (12, 12', 13, 13') and/or the back contact means (25, 25') being formed from a solder material or being designed with a solder coating, and the plug-in socket being formed with one insertion channel or two insertion channels (44, 44') for a soldering tool, which is or are accessible via an access opening (42, 42') on the lower face of the plug-in socket and via which contact with the contact means can be established, **characterized in that** the solar module (22) is arranged on the receiving surface (29) and the common contact surfaces of the contact means (12, 12', 13, 13') with the back contact means (25, 25') are heated up to the melting point of the solder by a soldering tool inserted into the insertion channel or successively inserted into the insertion channels (44, 44') or two soldering tools inserted simultaneously in parallel into the insertion channels (44, 44').

31. Method according to claim 30, **characterized in that** the insertion channel or the insertion channels (44, 44') ends or end at its or their upper end at an effective distance from the contact means (12, 12', 13, 13'), and the and the common contact surfaces of the contact means (12, 12', 13, 13') with the back contact means (25, 25') are heated up to the melting point of the solder by an induction soldering tool (43) inserted into the insertion channel or successively inserted into the insertion channels (44, 44') or two induction soldering tools (43) inserted simultaneously in parallel into the insertion channels (44, 44').

## Revendications

1. Élément de couverture de toit comportant un corps de base (27) plat dont le côté supérieur présente une surface de réception (29) pour un module solaire (22) et qui présente une ouverture (30) ou un alésage s'étendant perpendiculairement à sa surface de base, à travers lequel au moins deux câbles (5, 5', 5‴, 6, 6', 6‴) électriques sont guidés conjointement, dans lequel les câbles (5, 5', 5‴, 6, 6', 6‴) se terminent sur le côté supérieur du corps de base (27) dans la zone de la surface de réception (29) sous forme de moyens de contact (12, 12', 13, 13') qui sont maintenus ou guidés de manière à pouvoir se déplacer axialement dans un socle de connexion (11, 11') plat commun,
**caractérisé en ce que** les câbles (5, 5', 5‴, 6, 6', 6‴) électriques sont guidés dans un socle d'enfichage (1, 1', 1") commun depuis le côté inférieur à travers l'ouverture (30) ou l'alésage, dans lequel le socle d'enfichage (1, 1', 1") est maintenu par complémentarité de forme sur le côté inférieur du corps de base (27) dans la direction d'enfichage axiale par une bride d'enfichage (8, 8') et, sur le côté supérieur du corps de base (27), contre sa direction d'enfichage axiale, est maintenu par complémentarité de forme et/ou par force par un moyen de blocage et forme le socle de connexion (11, 11') sur le côté supérieur du corps de base (27).

2. Élément de couverture de toit selon la revendication 1,
**caractérisé en ce qu'**un élément d'étanchéité est agencé entre la bride d'enfichage (8, 8') et le côté inférieur du corps de base (27).

3. Élément de couverture de toit selon la revendication 1 ou 2,
**caractérisé en ce que** le moyen de blocage est une agrafe ou une bague d'arrêt ressort.

4. Élément de couverture de toit selon la revendication 1 ou 2,
**caractérisé en ce que** le moyen de blocage est un élément creux qui est réalisé avec une bride de maintien (19) agissant sur le côté supérieur du corps de base (27) à l'encontre de la direction d'enfichage axiale du socle d'enfichage (1, 1', 1") et qui vient en prise par complémentarité de forme ou par complémentarité de forme et par force, par une coulisse intérieure (18), avec une coulisse extérieure (10, 10') correspondante du socle d'enfichage (1, 1', 1").

5. Élément de couverture de toit selon la revendication 4,
**caractérisé en ce que** l'élément creux est une douille extérieure (16) qui vient en prise, par un assemblage par vis ou par une connexion par enfichage et rotation, avec une section d'enfichage correspondante du socle d'enfichage.

6. Élément de couverture de toit selon la revendication 4,
**caractérisé en ce que** l'élément creux est une douille extérieure (16) fendue dans la direction d'enfichage axiale qui vient en prise par encliquetage avec une section d'enfichage (9, 9') correspondante du socle d'enfichage (1, 1', 1").

7. Élément de couverture de toit selon l'une des revendications 4 à 6,
**caractérisé en ce qu'**un élément d'étanchéité est agencé sur le côté supérieur de la bride de maintien (19).

8. Élément de couverture de toit selon l'une des revendications 1 à 7,
**caractérisé en ce que** les moyens de contact (12, 12', 13, 13') font saillie hors du socle de connexion (11) et sont guidés dans celui-ci à l'encontre de la direction d'enfichage par un ressort.

9. Élément de couverture de toit selon l'une des revendications 1 à 7,
**caractérisé en ce que** les moyens de contact (12, 12', 13, 13') sont maintenus dans le socle de connexion de manière fixe ou avec un jeu de déformation axial.

10. Élément de couverture de toit selon la revendication 9,
**caractérisé en ce que** les moyens de contact (12, 12', 13, 13') sont formés à partir d'un matériau de brasage ou sont réalisés avec un revêtement de brasage.

11. Élément de couverture de toit selon l'une des revendications 1 à 7, 9 ou 10, **caractérisé en ce que** le socle d'enfichage (1, 1', 1") est réalisé avec un canal d'insertion ou deux canaux d'insertion (44, 44') pour un outil de brasage, lesquels sont accessibles par l'intermédiaire d'une ouverture d'accès (42, 42') sur le côté inférieur du socle d'enfichage et par l'intermédiaire desquels un contact avec les moyens de contact (12, 12', 13, 13') peut être établi.

12. Élément de couverture de toit selon la revendication 11,
**caractérisé en ce que** le canal d'insertion ou les canaux d'insertion (44, 44') se terminent, au niveau de leur extrémité supérieure, à une distance d'action des moyens de contact (12, 13) et un outil de brasage par induction (43) peut être inséré dans le canal d'insertion ou les canaux d'insertion (44, 44').

13. Élément de couverture de toit selon l'une des revendications 1 à 12,
**caractérisé en ce que** les câbles (5, 5', 5‴, 6, 6', 6‴) se terminent sur le côté inférieur du corps de base (27) ou en dessous du côté inférieur, à une certaine distance dudit corps de base, sous forme de contacts (32, 32', 32", 32‴) dans un connecteur à fiches (28, 28') multipolaire.

14. Élément de couverture de toit selon l'une des revendications 1 à 13,
**caractérisé en ce qu'**un condensateur (35) est prévu, lequel est connecté entre les câbles (5, 5', 5‴, 6, 6', 6‴), contacts (32, 32', 32", 32‴) ou moyens de contact (12, 12', 13, 13') formant les deux pôles électriques.

15. Élément de couverture de toit selon l'une des revendications 1 à 14,
**caractérisé en ce qu'**une diode de retour de courant (34) est agencée dans le câble ou dans les câbles (5, 5', 5‴, 6, 6', 6‴) formant au moins un pôle électrique.

16. Élément de couverture de toit selon la revendication 13 et l'une des revendications 14 et/ou 15 ou les deux, **caractérisé en ce que** le condensateur (35) et/ou la diode de retour de courant (34) sont agencés à l'intérieur du connecteur à fiches (28, 28').

17. Élément de couverture de toit solaire (26, 26'), présentant un élément de couverture de toit selon l'une des revendications 1 à 16 et un module solaire (22) agencé sur le côté supérieur du corps de base (27), **caractérisé en ce que** le module solaire (22) présente des moyens de contact arrière (25, 25') sur son côté tourné vers le côté supérieur du corps de base (27) qui sont agencés de manière à correspondre aux moyens de contact (12, 13).

18. Élément de couverture de toit solaire (26, 26') selon la revendication 17, dans lequel les moyens de contact (12, 12', 13, 13') sont maintenus dans le socle de connexion (11, 11') de manière fixe ou avec un jeu de déformation axial,
**caractérisé en ce que** les moyens de contact arrière (25, 25') sont formés à partir d'un matériau de brasage ou sont réalisés avec un revêtement de brasage.

19. Élément de couverture de toit solaire (26, 26') selon la revendication 17 ou 18, **caractérisé en ce que** le module solaire (22) présente une matrice cellulaire (23) composée de plusieurs cellules solaires montées en série.

20. Élément de couverture de toit solaire (26, 26') selon la revendication 19,
**caractérisé en ce que** le format, le nombre et l'agencement des cellules solaires sont choisis de telle sorte que la surface de réception (29) disponible du corps de base (27) est couverte le plus largement possible en tenant compte simultanément de la tension totale souhaitée.

21. Élément de couverture de toit solaire (26, 26') selon l'une des revendications 17 à 20, **caractérisé en ce que** son côté supérieur formant la couverture de toit est une vitre en verre (24) ou une vitre ou une feuille en matière plastique.

22. Agencement d'éléments de couverture de toit solaire (26, 26') selon l'une des revendications 17 à 21, **caractérisé en ce que** les éléments de couverture de toit solaire (26, 26') sont connectés entre eux selon un montage en parallèle.

23. Agencement d'éléments de couverture de toit solaires (26, 26') selon l'une des revendications 17 à 21, **caractérisé en ce que** respectivement au moins deux éléments de couverture de toit solaires (26, 26') sont connectés entre eux par groupes selon un montage en série et les groupes d'éléments de couverture de toit solaires montés en série sont connectés entre eux selon un montage en parallèle.

24. Agencement d'éléments de couverture de toit solaires (26, 26') selon la revendication 23, **caractérisé en ce que** le nombre d'éléments de couverture de toit solaires (26, 26') connectés entre eux par groupes selon un montage en série est adapté pour une tension totale allant de 80 V à 120 V maximum.

25. Agencement d'éléments de couverture de toit solaires (26, 26') selon la revendication 23 ou 24, dans lequel les câbles (5, 5', 5"', 6, 6', 6"') des éléments de couverture de toit solaires se terminent respectivement en dessous du côté inférieur du corps de base dans un connecteur à fiches (28, 28') multipolaire, **caractérisé en ce que** les éléments de couverture de toit solaires (26, 26') peuvent être connectés entre eux avec leurs connecteurs à fiches (28, 28') respectivement par groupes par l'intermédiaire d'un moyen de connexion par enfichage multiple commun et peuvent être montés en série, dans lequel le montage en série est établi par un guidage de câble approprié à l'intérieur du moyen de connexion par enfichage multiple, et les groupes d'éléments de couverture de toit solaires peuvent être connectés respectivement à des câbles principaux (5", 6") par l'intermédiaire du moyen de connexion par enfichage multiple et peuvent être montés en parallèle entre eux.

26. Agencement d'éléments de couverture de toit solaire (26, 26') selon la revendication 25, **caractérisé en ce que** les moyens de connexion par enfichage multiples viennent respectivement en prise avec deux contacts de pénétration sur deux pôles électriques différents des câbles principaux (5", 6").

27. Procédé permettant d'établir un élément de couverture de toit solaire (26, 26') selon l'une des revendications 17 à 21, dans lequel les moyens de contact (12, 12', 13, 13') font saillie hors du socle de connexion (11, 11') et sont guidés dans celui-ci à l'encontre de la direction d'enfichage par un ressort, **caractérisé en ce que** le module solaire est agencé sur la surface de réception (29), dans lequel une adhérence est établie entre les moyens de contact (12, 12', 13, 13') et les moyens de contact arrière (25, 25') à l'encontre de la charge supportée par le ressort des moyens de contact (12, 12', 13, 13').

28. Procédé permettant d'établir un élément de couverture de toit solaire (26, 26') selon l'une des revendications 17 à 21, dans lequel les moyens de contact (12, 12', 13, 13') sont maintenus dans le socle de connexion de manière fixe ou avec un jeu de déformation axial et les moyens de contact (12, 12', 13, 13') et/ou les moyens de contact arrière (25, 25') sont formés à partir d'un matériau de brasage ou sont réalisés avec un revêtement de brasage, **caractérisé en ce que** le module solaire (22) est agencé sur la surface de réception (29) et un chauffage des surfaces de contact communes des moyens de contact (12, 12', 13, 13') comportant les moyens de contact arrière (25, 25') est provoqué jusqu'au point de fusion de la brasure au moyen d'un apport d'énergie à travers le module solaire (22).

29. Procédé selon la revendication 28, **caractérisé en ce que** l'apport d'énergie est effectué par brasage par induction.

30. Procédé permettant d'établir un élément de couverture de toit solaire (26, 26') selon l'une des revendications 17 à 21, dans lequel les moyens de contact (12, 12', 13, 13') sont maintenus dans le socle de connexion de manière fixe ou avec un jeu de déformation axial et les moyens de contact (12, 12', 13, 13') et/ou les moyens de contact arrière (25, 25') sont formés à partir d'un matériau de brasage ou sont réalisés avec un revêtement de brasage, et dans lequel le socle d'enfichage est réalisé avec un canal d'insertion ou deux canaux d'insertion (44, 44') pour un outil de brasage, lesquels sont accessibles par l'intermédiaire d'une ouverture d'accès (42, 42') sur le côté inférieur du socle d'enfichage et par l'intermédiaire desquels un contact avec les moyens de contact peut être établi, **caractérisé en ce que** le module solaire (22) est agencé sur la surface de réception (29) et un chauffage des surfaces de contact communes des moyens de contact (12, 12', 13, 13') comportant les moyens de contact arrière (25, 25') est provoqué jusqu'au point de fusion de la brasure par un outil de brasage inséré dans le canal d'insertion ou successivement dans les canaux d'insertion (44, 44') ou par deux outils de brasage insérés simultanément en parallèle dans les canaux d'insertion (44, 44').

31. Procédé selon la revendication 30, **caractérisé en ce que** le canal d'insertion ou les canaux d'insertion (44, 44') se terminent, au niveau de leur extrémité supérieure, à une distance d'action des moyens de contact (12, 12', 13, 13'), et le et un chauffage des surfaces de contact communes des moyens de contact (12, 12', 13, 13') comportant les moyens de contact arrière (25, 25') est provoqué jusqu'au point de fusion de la brasure par un outil de brasage par induction (43) inséré dans le canal d'insertion ou successivement dans les canaux d'insertion (44, 44') ou par deux outils de brasage par induction (43) insérés simultanément en parallèle dans les canaux d'insertion (44, 44').
